Europäisches Patentamt

European Patent Office

Office européen des brevets

(19)

(11) Publication number: **0 020 838**
**B1**

(12) **EUROPEAN PATENT SPECIFICATION**

(45) Date of publication of patent specification: **20.06.84**

(21) Application number: **79302892.9**

(22) Date of filing: **13.12.79**

(51) Int. Cl.³: **G 05 B 19/18,**
**G 05 B 19/04, D 05 B 19/00**

(54) **Sewing machine.**

(30) Priority: **20.06.79 JP 78334/79**

(43) Date of publication of application:
**07.01.81 Bulletin 81/1**

(45) Publication of the grant of the patent:
**20.06.84 Bulletin 84/25**

(84) Designated Contracting States:
**CH DE FR GB IT NL SE**

(56) References cited:
**DE - A - 2 746 946**
**DE - A - 2 830 903**
**DE - A - 2 831 116**
**FR - A - 2 241 830**
**GB - A - 1 463 410**
**GB - A - 1 474 197**
**GB - A - 1 484 660**
**US - A - 3 619 756**
**US - A - 3 977 338**
**US - A - 3 984 745**
**US - A - 4 116 144**
**US - A - 4 122 786**
**US - A - 4 135 462**

(73) Proprietor: **Maruzen Sewing Machine Co. Ltd**
**24, Satahigashi-machi 2-chome**
**Moriguchi-shi, Osaka-fu (JP)**

(72) Inventor: **Matsumura, Nobuyoshi**
**429, Kyokoji Yao-shi**
**Osaka-fu (JP)**

(74) Representative: **Wright, Peter David John et al,**
**R.G.C. Jenkins & Co. 12-15, Fetter Lane**
**London EC4A 1PL (GB)**

Courier Press, Leamington Spa, England.

## Description

Technical field

The present invention relates to a sewing machine and more particularly to a sewing machine having electronic control means for controlling the feed of cloth and/or the stitch width amplitude.

Background art

Sewing machines have been provided with mechanisms for providing different patterns of stitches in cloth. Normally, each of the different patterns includes a plurality of stitches which may extend various distances laterally and along the feed path and the pattern is repeated after a predetermined number of stitches. Such stitch patterns are obtained by positioning the needle for each stroke thereof at a predetermined position on the cloth (positional coordinates), that is the sewing needle is moved sideways (stitch width or bight) a predetermined distance and the cloth is fed forward or backward a predetermined amount between strokes of the needle. Thus, each stitch pattern comprises a series of positional coordinates for the sewing needle. The required series of positional coordinates for a selected stitch pattern are contained in a memory apparatus in the sewing machine, which memory apparatus is read out upon command and the read out data is applied to the feed and bight movement apparatus.

The memory apparatus may be mechanical or electronic. Prior art mechanical memory apparatus normally included cams which were shaped to provide the desired series of positional coordinates. Electronic memories have included a digital type for storage of the series of positional coordinates.

One example of a sewing machine including an electronic memory is described in U.S. Patent No. 4,135,462. This discloses an arrangement in which a pulse generator driven by a mechanical part of the sewing machine delivers pulses to a binary counter. The count output of the counter is used to read out data from a read-only memory (ROM). The positional data read out of the ROM is delivered via logic circuits to digital-to-analog converters, so as to obtain analog signals used to drive the feed and bight movement apparatus of the sewing machine.

There are many disadvantages to arrangements such as this, which use digital memories for storage of the positional coordinates. Rather complex circuitry, involving a large number of integrated circuits, is needed, and this increases the cost of the sewing machine.

Disclosure of the invention

According to the present invention, there is provided a sewing machine having feed means operable to feed cloth being sewn, and bight means for swinging a sewing needle in a direction transverse to the cloth feeding direction, the bight and feed means each having displacement controlling means for controlling the respective displacements caused thereby during sewing so as to produce a predetermined stitch pattern, each displacement controlling means comprising pattern determining means coupled to a plurality of count terminals of a counter means for receiving therefrom a digital count signal indicative of the next stitch to be sewn, and a voltage generator for generating an analog reference voltage under the control of the pattern determining means for causing an appropriate displacement for said next stitch, characterised in that the voltage generator is formed by a voltage divider comprising series connection of a plurality of resistor components coupled to receive a predetermined voltage across the ends of said series connection, said voltage divider having a plurality of taps for supplying respective analog reference voltages, in that the counter means is arranged to produce an output signal at a single, respective one of said count terminals for each stitch of the pattern, and in that said pattern determining means comprises a plurality of connection means each coupled between a respective count terminal and a selected one of said taps so that a signal appearing at said count terminal causes the generation of the reference voltage corresponding to said one tap.

The circuit of a sewing machine according to the present invention can be much more simple than in the machines of the prior art which use digital memories. The pattern resolution (i.e. the number of possible coordinate positions for each stitch) can be selected as desired simply by providing the required number of voltage generator terminals, whereas in the prior art arrangements the pattern resolution was limited by the number of bits of digital data stored in the memory. Further, arrangements according to the present invention are very easy to modify, and do not require the large number of complex integrated circuits needed in the prior art.

Brief description of the drawings

Fig. 1 is a view showing the major portion of a multiple pattern sewing machine embodying the present invention;

Fig. 2 is a block diagram of one embodiment of the present invention;

Figs. 3A and 3B are schematic diagrams of an important portion of the Fig. 2 embodiment;

Fig. 4A shows one example of a pattern for explaining the operation of the Fig. 2 embodiment;

Fig. 4B is a table showing positional data of the respective stitches;

Fig. 5 is a block diagram of another embodiment of the present invention;

Fig. 6 is a block diagram of a further embodiment of the present invention;

Fig. 7A shows one example of a pattern for explaining the operation of the Fig. 6 embodiment;

Fig. 7B is a table showing positional data of the respective stitches;

Fig. 8 is a schematic diagram of an important portion of the Fig. 6 embodiment;

Fig. 9 is a schematic diagram of a portion of Fig. 3A showing the keyboard and switch decoder in greater detail;

Fig. 10 is a schematic diagram of a portion of Fig. 2 showing the analog switch and the manual bight control in greater detail;

Fig. 11 is a block diagram of still another embodiment of the present invention;

Fig. 12 shows a schematic diagram of a portion of the Fig. 11 embodiment.

Figs. 13A and 13B show in more detail a portion of Fig. 12;

Figs. 14A and 14B are schematic diagrams of the reference voltage circuit and the analog switch of the Fig. 11 embodiment;

Fig. 15 is a schematic diagram of another embodiment of a circuit which may be employed for the bight resistor network and analog switch of Fig. 2.

Fig. 16 is a schematic diagram of another embodiment of a circuit which may be employed for the feed resistor network and analog switch of the Fig. 2 embodiment;

Figs. 17A, 17B and 17D show pattern examples for explaining the embodiments shown in Figs. 15 and 16, respectively; and

Fig. 17C is a table showing positional data of the respective stitches of the pattern shown in Fig. 17B.

Description of the preferred embodiments

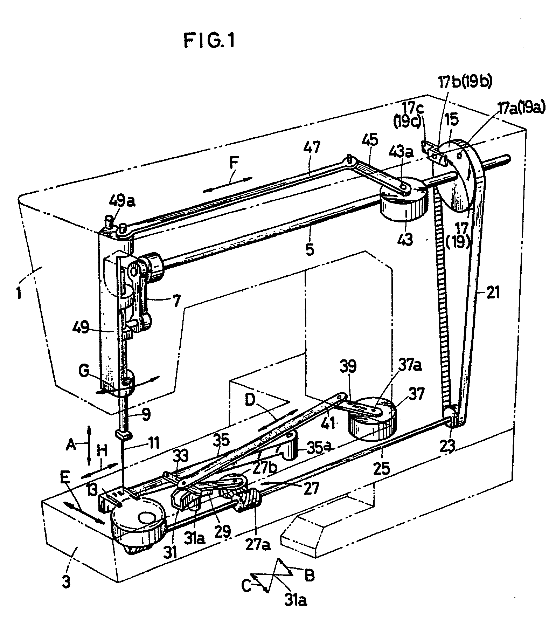

Fig. 1 is a mechanism diagram showing the major portion of a multiple pattern sewing machine to which the present invention has been applied. Below a sewing machine bed 3 or inside a bracket arm 1, an unillustrated driving motor is installed. The rotation of this driving motor is transmitted, at a certain speed reduction ratio, to a main shaft or upper shaft 5 inside the bracket arm 1. As known in the art, the upper shaft 5 is connected to the various mechanisms of the sewing machine.

Connected to the upper shaft 5 is a crank mechanism 7 for reciprocating a needle bar 9 and hence a sewing needle 11 in the direction of arrow A. At the position of the sewing needle 11 on the bed 3, a feed dog 13 for cloth feed is disposed so that it can be displaced in the direction of an arrow E.

Installed inside the bed 3 is a lower shaft 25 for driving the feed dog 13. A timing pulley 15 integrally rotatably fixed on the upper shaft 5 and a timing pulley 23 integrally rotatably fixed on the lower shaft 25 are interconnected by a timing belt 21. Therefore, as the upper shaft 5 is rotated, the lower shaft 25 is rotated, e.g., with double the rpm of the upper shaft. A gear wheel 27a, which is one of a pair of spiral gears 27, is integrally fixed on the lower shaft 25 for rotation therewith. The other gear wheel 27b in the pair 27 is rotatably supported on an unillustrated rotary shaft inside the bed 3. Therefore the rotation of the lower shaft 25 causes the rotation of the gear wheel 27b. At an eccentric position on the upper surface of the gear wheel 27b, one end of a connecting lever 29 is pivoted by a pin. The other end of the connecting lever 29 is rotatably fixed to one end of a feed regulator 31.

The feed regulator 31 is curved in an arc and pivotally supported by a shaft 31a disposed at the middle of the curve. The regulator 31 has a U-shaped guide groove in which is slidably inserted a slide block (not shown) downwardly projecting from the lower surface of a slide plate 33. The other end of the slide plate 33 is attached to a feed bar 35 which is rotatably connected at one end 35a thereof to the bed 3 and fixed at the other end to the feed dog 13. The middle point of the slide plate 33 is attached to one end of a connecting lever 41. A connecting arm 39 is fixed at one end thereof on the rotary shaft 37a of a direct current motor 37, and the other end of the connecting lever 41 is pivotally connected to the other end of the connecting arm 39. The direct current motor 37 serves as a feed control motor.

On the other hand, the bracket arm 1 contains a direct current motor 43 for bight control. Fixed to the rotary shaft 43a of the direct current motor 43 is one end of a connecting arm 45, the other end of which is pivotally connected to one end of a connecting lever 47. The other end of the connecting lever 47 is pivotally connected to a needle bar support 49 which is supported by a shaft 49a so as to be swingable in the direction of an arrow G. The movement of the needle bar support 49 causes the needle bar 9 to be oscillated generally in the direction of an arrow H.

The operation of the arrangement constructed in the manner described above will now be outlined to the extent needed for the understanding of the present invention.

First of all, the power is turned on. In response thereto, the driving motor is energized to rotate the upper shaft 5. The rotation of the upper shaft 5 is converted into a linear reciprocating motion by the crank mechanism 7, so that the needle bar 9 and hence the sewing needle 11 are reciprocated in the direction of an arrow A between the upper and lower dead points. The rotation of the upper shaft 5 causes the rotation of the timing pulley 15, which is transmitted to the timing pulley 23 by the timing belt 21, whereby the lower shaft 25 is driven for rotation. As a result, the gear wheel 27b in the pair of spiral gears 27 is rotated, whereby the connecting lever 29 pivotally connected thereto, i.e. the feed regulator 31, is swung in the directions of arrows B and C around the axis of the shaft 31a. In this case,

the amplitude of the swing motion of the feed regulator 31 increases as the opposite ends of the regulator are approached. It does not swing at all at its center. Therefore, what position the slide plate 33 occupies in the feed regulator 31 determines the amount of displacement of the feed bar 35, i.e. of the feed dog 13 in the direction of an arrow E. If, therefore, the amount of rotation of the direct current motor 37 is controlled to displace the connecting lever 41 in the direction of an arrow D, then the amount of displacement of the feed dog 13, i.e., the amount of cloth feed, is controlled. In this case, if the slide plate 33 is positioned on the right side (the arrow B side), the feed is forward, while if it is positioned on the left side (the arrow C side), the feed is backward.

Further, the direct current motor 43 is rotated through a certain angle, whereby the connecting lever 47 is moved in the direction of an arrow F and the needle bar support 49 is swung in the direction of an arrow G. Therefore, the sewing needle 11 is swung in the direction of an arrow H, thereby achieving the so-called zigzag sewing. The amplitude (bight) of the sewing needle 11 is controlled by controlling the angle of rotation of the direct current motor 43.

Therefore, in this embodiment, by controlling the angles of rotation of the direct current motors 37 and 43 according to a coordinate position of a pattern to be sewn, the feed (arrow E) and bight (arrow H) are controlled.

Although the direct current motors 37 and 43 for making an arcuate motion are employed in the Fig. 1 embodiment, alternatively linear type direct current motors for making a linear motion may be employed to control the position of the connecting levers 47 and 41 to adjust the amplitude and the feed amount.

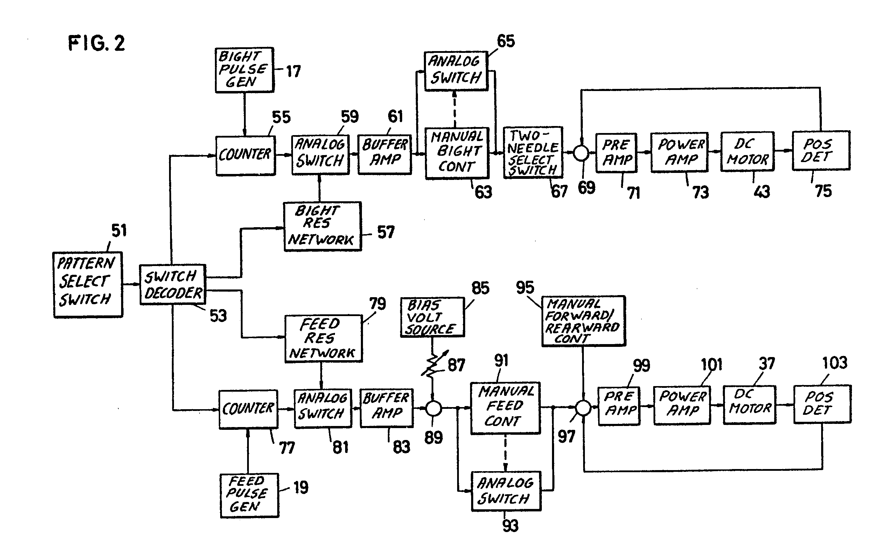

The pulley 15 comprises a magnet 17a (19a) which is partially embedded on the side surface of the pulley 15. A proximity switch 17b (19b), such as a Hall effect device, a lead switch, or the like, is installed on a bracket 17c (19c) fixed on the arm 1, and in association with the magnet 17a (19a). Accordingly, the proximity switch 17b (19b) serves to generate one pulse per revolution of the above described shaft 5, i.e. one pulse per each downward movement of the needle 11. A bight pulse generator 17 (Figure 2) and a feed pulse generator 19 are thus implemented. It is pointed out that since the bight pulse generator 17 and a feed pulse generator 19 may be of any type that generates one timing pulse per each downward movement of the needle any other types such as photoelectric switch, a microswitch or the like may be utilized. Meanwhile, the bight pulse generator 17 is preferably structured such that one pulse is obtained in the course of the movement of the needle 11 about the upper dead point and the feed pulse generator 19 is preferably structured such that one pulse is obtained in the course of the movement of the needle 11 from its middle point to the upper dead point. Alternatively, the bight pulse generator 17 and the feed pulse generator 19 can be shared, by delaying the output of either the bight pulse generator 17 or the feed pulse generator 19 to provide a pseudo output of the other.

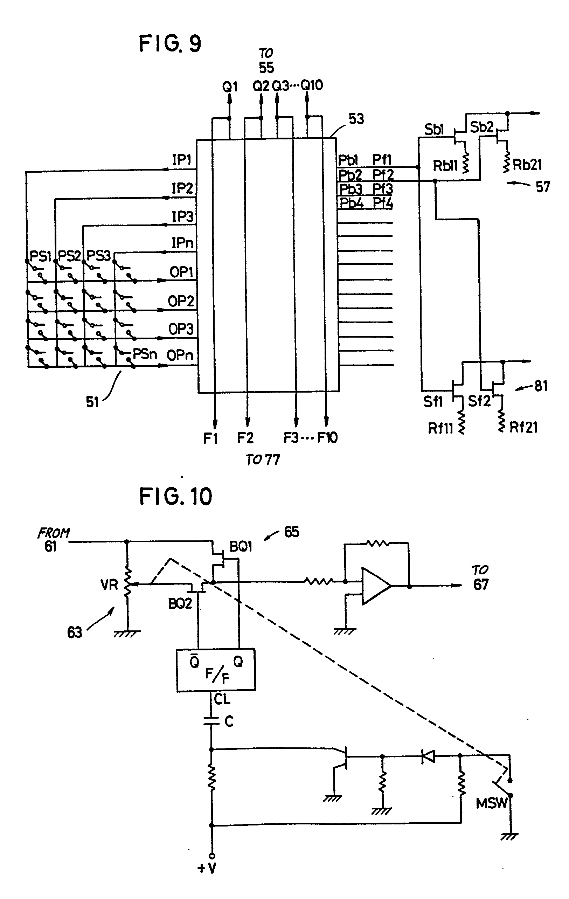

Fig. 2 shows a block diagram of one embodiment of the present invention. The embodiment is shown comprising a pattern selecting switch 51 for the purpose of sewing a plurality of kinds of patterns. The pattern selecting switch 51 comprises a keyboard matrix, which, as shown in Fig. 9, comprises a plurality of key switches $PS_1$ through $PS_n$ associated with the patterns $P_1$ through $P_{n'}$ respectively. By closing a desired key switch associated with a pattern to be sewn, an associated pattern selecting signal is obtained by completing a circuit between an output terminal $OP_1$ through $OP_4$ and an input terminal $IP_1$ through $IP_4$ of a switch decoder 53. The switch decoder 53 may include binary coded circuits, such as AND circuits, NAND circuits, etc. which serve to decode the pattern selecting signal from the pattern selecting switch 51, and provide two selection signals, one for the bight and one for feed of the pattern selected. The switch decoder 53 continues to provide the same pattern selection signals after a given pattern is selected until a different pattern is selected or a power supply switch is turned off. the bight selection signal and the feed selection signal from the switch decoder 53 are applied respectively to a bight resistance network 57 and a feed resistance network 79.

The switch decoder 53 also provides a signal representative of the number of stitches of the pattern selected based on the selecting signal and this signal is applied, as shown in Fig. 9, the the counter 55 by means of one of a plurality of connections $Q_1$ through $Q_{10}$ and to counter 77 by one of a plurality of connections $F_1$ through $F_{10}$ to preset the same.

The counters 55 and 77 are adapted to count in response to the bight pulse and the feed pulse, respectively, obtainable from the corresponding bight pulse generator 17 and the feed pulse generator 19, respectively, and provide a separate output from each counter for each count value. When the counters 55 and 77 count to a number equal to the number of stitches as preset by the switch decoder 53, the counters 55 and 77 are returned to the initial state, whereupon a new count is started. In this connection, the individual outputs $Q_1$—$Q_{10}$ of the counter 55 and the signal $Q_1$—$Q_{10}$ of the switch decoder 53 are applied to a binary coded circuit, not shown, the output of which is connected to the reset of the counter. Likewise, the individual outputs $F_1$—$F_{10}$ of the counter 77 and the signal $F_1$—$F_{10}$ of the switch decoder 53 are applied to a binary coded circuit, not shown, the output of which is connected to the reset of the counter 77.

Generally, the bight resistance network 57 and the feed resistance network 79 each comprises a group of voltage dividers each including a plurality of series connected resistors. One voltage divider is provided for each pattern and is adapted to be supplied with a supply voltage across its end terminals such that a voltage corresponding to a coordinate position for each stitch in the pattern is obtained through resistance division of the supply voltage.

As shown in Fig. 2, the outputs from the counters 55 and 77 are applied to analog switches 59 and 81, respectively. Each of the analog switches 59 and 81 comprises a plurality of switching devices corresponding in number to the maximum number of needle strokes in one cycle of a pattern, the switching devices being turned on in order by the count value outputs of the associated counter 55, 79. Accordingly, for each count of the counter 55, the analog switch 59 provides an output voltage, obtained from the bight resistance network 57, corresponding to a bight voltage associated with the coordinate position of one stitch of the selected pattern. Similarly, for each count of the counter 77, the analog switch 81 provides an output voltage, obtained from the feed resistance network 79, corresponding to the voltage associated with the feed amount (incremental) for one stitch of the selected pattern.

The bight voltage from the analog switch 59 is applied through a buffer amplifier 61 to a manual bight control circuit 63 and an analog switch 65. The output voltage from the analog switch 81 is applied through a buffer amplifier 83 to an adder 89. The adder 89 serves to add the output voltage from the buffer amplifier 83 and the voltage obtained through a variable resistor 87 from a bias voltage source 85 to provide an output or feed voltage to a manual feed control circuit 91 and an analog switch 93. Analog switches 65 and 93 are conduction controlled by the control circuits 63 and 91, respectively, whereby a bight voltage and a feed voltage, as adjusted, are obtained.

A circuit which may be employed for the manual bight control circuit 63 and the analog switch 65 and for the manual feed control 91 and analog switch 93 is shown in Fig. 10. Initial operation of the manual control VR causes the manual switch MSW to close which, in turn, causes a clock pulse to be fed to the flip flop causing it to switch states. This change of state causes the field effect transistor $BQ_2$ to conduct, thereby providing the operator with manual control of the bight or feed. Moving the manual control to its off position, opens the switch MSW, causing the flip flop to switch states and turn on field effect transistor $BQ_1$. The manual control is thus bypassed.

The bight voltage from the analog switch 65 is selectively switched by means of a two-needle selection switch 67 and is applied to an adder 69, which is the input of a bight servo mechanism for controlling the displacement of the bight mechanism. The two-needle selection switch 67 is provided to reduce the bight voltage and thus change the bight width for preventing the needle from colliding with a needle plate. The feed voltage as adjusted from the analog switch 93 is applied to an adder 97, which is the input of a feed servo mechanism for controlling the displacement of the feed mechanism. The feed adder 97 is supplied with a control voltage from a manual forward/rearward control circuit 95. The forward/rearward control circuit 95 provides a manual control to coincide the forward stitch pitch and the rearward stitch pitch of a button hole, automatic reverse stitch pattern, and the like.

The adder 69 receives a feed back voltage from a position detector 75, which indicates the position of the direct current motor 43, and adds the bight voltage from the above described two-needle selecting switch 67 and the above described feed back voltage to provide an output to a pre-amplifier 71. The output of the pre-amplifier 71 is coupled to a power amplifier which, in turn, drives the direct current motor 43. Similarly, the adder 97 adds the feed back voltage from a position detector 103, which indicates the position of the direct current motor 37, the feed back voltage from the analog switch 93 and the control voltage from the above described forward/rearward control circuit 95, to provide an output to a pre-amplifier 99. The output of the pre-amplifier 99 is coupled to a power amplifier 101 which, in turn, drives the direct current motor 37.

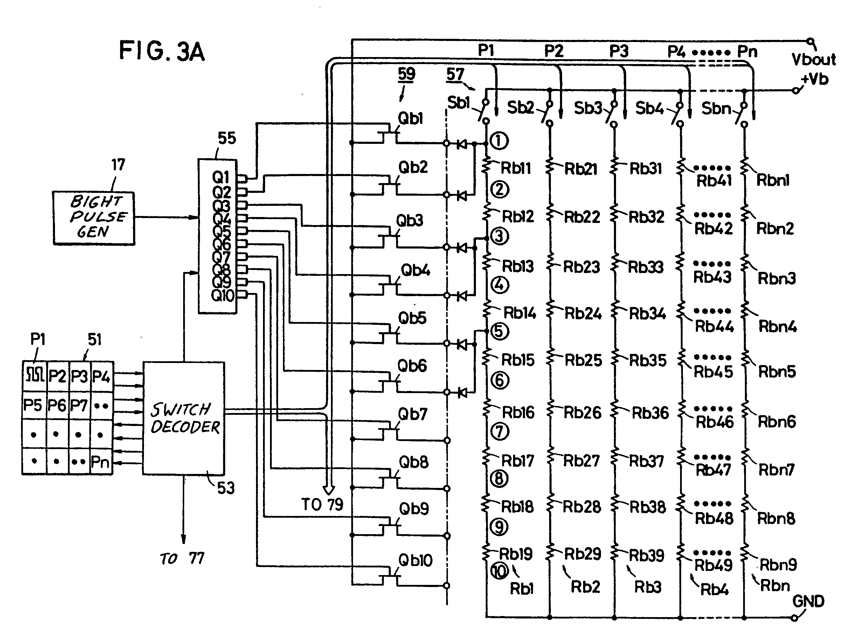

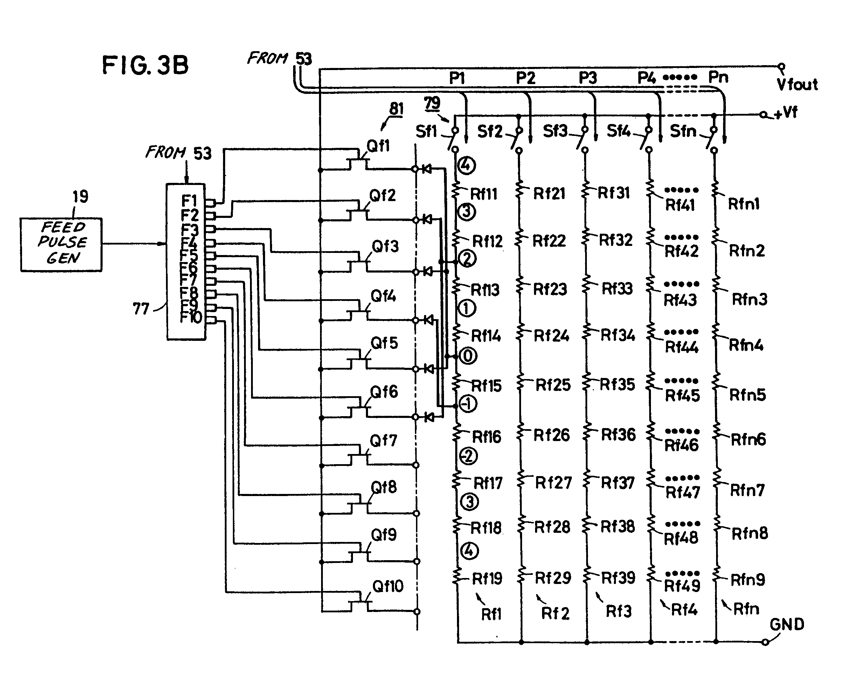

Fig. 3A depicts in particular detail the bight resistance network 57, the analog switch 59 and the counter 55 shown in Fig. 2. Fig. 3B similarly shows in detail the feed resistance network 79, the analog switch 81 and the counter 77. The bight resistance network 57 and the feed resistance network 79 are similar in construction. Therefore, only the bight resistance network 57 shown in Fig. 3A is described in detail.

The bight resistance network 57 comprises a plurality (n) of voltage divider circuits Rb1 through Rbn, one associated with each kind of pattern that can be selected by means of the pattern selection switch 51. The voltage divider circuit Rb1 comprises nine series connected resistors Rb11 through Rb19 for providing ten voltage drops or steps. Similarly, the voltage divider circuit Rb2 also comprises nine series connected resistors Rb21 through Rb29. Similarly, the voltage divider circuit Rbn comprises nine series connected resistors Rbn1 through Rbn9. The number and the resistance value of the resistors in each of these voltage divider circuits Rb1 through Rbn is determined by the number of coordinate positions included in one cycle of the pattern associated with that voltage divider circuit. The upper ends of the voltage divider circuits Rb1 through Rbn are connected through respective switches Sb1 through Sbn to a voltage source +Vb. The lower ends of the voltage divider circuits Rb1 through Rbn are connected to the ground. The switches Sb1 through Sbn may be field effect transistors that are selectively rendered conductive in response to selection of a pattern on the pattern selection switch 51, i.e. the pattern selecting signal from the pattern selection switch 51 causes the switch decoder 53 to produce the pattern selection representing signal that turns on the switch Sb1 through Sbn associated with the selected pattern.

The analog switch 59 comprises ten field effect transistors Qb1 through Qb10 each serving as a switching device. The number of switching devices included in the analog switch 59 is determined by the maximum number of stitches included in one cycle of any pattern selectable by the pattern selection switch. However, for any particular pattern, the number of switching devices Qb1 through Qb10, connected to taps on the associated voltage divider circuit is equal to the number of stitches included in one cycle of that pattern.

The gate electrode or the control electrode of each of the switching devices Qb1 through Qb10 is individually connected to each of the output terminals Q1 through Q10 of the counter 55, respectively. Accordingly, the switching devices Qb1 through Qb10 are individually turned on by respective outputs Q1 through Q10 of the counter 55. The drain electrodes or the output electrodes of these switching devices Qb1 through Qb10 are connected to a common bight voltage output terminal Vbout. The source electrodes or the input electrodes of the switching devices Qb1 through Qb10 are connected to the proper taps of the respective voltage divider circuits Rb1 through Rbn. The proper tap connection for a switching device is determined by the amount of bight movement required for the particular stitch associated with that switching device. For example, the first switching device, which is connected to tap 1 of voltage divider circuit Rb1 may be connected to tap 2 of voltage divider circuit Rb2 to tap 4 of voltage divider circuit Rb3, etc.

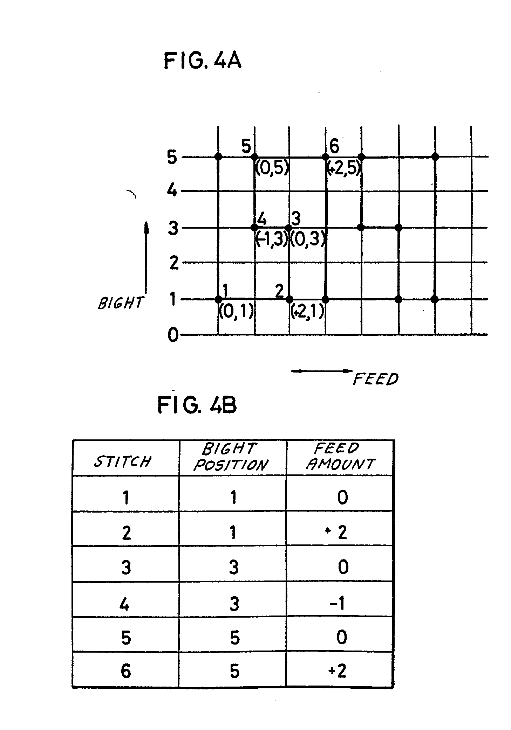

Fig. 4A shows one example of a pattern to be sewn, wherein the abscissa indicates the feed or cloth feed amount while the ordinate indicates the bight or the stitch width amplitude. Fig. 4B shows data concerning positional information of the bight and feed of the pattern. The bight is set by way of absolute coordinates and, in the pattern example shown, the maximum amplitude amount is equally divided into five. On the other hand, the feed is set by way of a relative displacement amount and, in the pattern example shown, the minimum feed amount, i.e. the absolute travel amount from the third to fourth position in the pattern example shown, is denoted as unity "1".

As for the first stitch, the bight is the lowermost in the figure and the feed is "0" since the same is in a stationary state wherein no forward or backward (leftward or rightward in the figure) travel from the former stitch or the sixth stitch occurs. As for the second stitch, the coordinate position of the bight is the same position as first stitch while the feed comes forward by unit "2" in a relative manner from the first stitch to become "+2". Similarly, the positional data of the bight and feed for the third to sixth stitches can be shown as numeral values as shown in Fig. 4B.

The relation between the resistance circuits Rb1 and Rf1 and the analog switches 59 and 81 shown in Figs. 3A and 3B is based on the pattern example shown in Figs. 4A and 4B. The pattern example in Fig. 4A is indicated as pattern P1, wherein for the first stitch the bight is "1" and the feed is "0", so that the input electrode of the switching device Qb1 of the analog switch 59 is connected to the junction ① of the corresponding resistance circuit Rb1 and the input electrode of the switching device Qf1 of the analog switch 81 is connected to the junction ⓞ of the corresponding resistance circuit Rf1. For the second stitch, the bight remains the same "1" as the first stitch while the feed is "+2". Accordingly, the input electrode of the switching device Qb2 of the analog switch 59 is connected to the junction ① of the resistance circuit Rb1 and the input electrode of the switching device Qf2 of the analog switch 81 is connected to the junction ② of the corresponding resistance circuit Rf1. For the third stitch of the pattern shown, the feed amount is "0" while the bight is in the position "3". Accordingly, the input electrode of the switching device Qb3 of the analog switch 59 is connected to the junction ③ of the resistance circuit Rb1 and the input electrode of the switching device Qf3 of the analog switch 81 is connected to the junction ⓞ.

Similarly, for the fourth stitch of the pattern shown, the bight remains the same "3" as the third stitch, while the feed is the rearward "−1". For the fifth stitch, the bight is "5", while the feed is "0" since the feed is in the same position as the fourth stitch. For the sixth stitch, i.e. the final stitch of one cycle of the pattern example shown, the bight is the same as the fifth stitch, while the feed is "+2". Accordingly, the input electrodes of the switching devices Qb4 through Qb6 of the analog switch 59 and the input electrodes of the switching devices Qf4 through Qf6 of the analog switch 81 are connected as shown in Figs. 3A and 3B.

The operation of the embodiment shown in Figs. 2 and 3 is as follows. First a pattern to be sewn is selected by means of the pattern selecting switch 51. By way of an example, assume that the pattern P1, i.e. the pattern example shown in Fig. 4A is selected. Accordingly, a pattern signal representative of the pattern P1 is obtained from the switch decoder 53. Therefore, the associated switches Sb1 and Sf1 of the resistance network 57 and 79 are turned on. Accordingly, the voltages +Vb and Vf are applied only to the voltage divider circuits Rb1 and Rf1, while the remaining voltage divider circuits Rb2 through Rbn and Rf2 through Rfn are not supplied with any voltage. The switch decoder 53 is responsive to selection of the pattern P1 by means of the pattern selection switch 51 to provide a signal representative of the number of the stitches in one cycle of the pattern P1, the number "6" in the example shown, to the counters 55 and 77. Accordingly, these counters 55 and 77 are preset as a six-count counter.

The driving motor is then energised, whereby the upper shaft 5 starts to rotate causing the bight pulse generator 17 and the feed pulse generator 19 to generate pulses. The first pulse obtained from the feed pulse generator 19 causes the feed counter 77 to advance one position to provide, for example, an output F1. Therefore, the switching device Qf1 in the analog switch 81 is turned on and the output obtainable from the junction (0) of the voltage divider circuit Rf1 is coupled through the switching device Qf1 to the output voltage terminal Vfout. The output voltage is coupled to the adder where a negative polarity bias voltage provided by the bias voltage source 85 is added thereto. The bias voltage is of an amplitude such that the voltage after addition, which is a voltage representative of the feed "0", does not cause the direct current motor 37 shown in Figs. 1 and 2 to rotate. Accordingly, the feed dog 13 shown in Fig. 1 does not effect movement of the cloth. Thereafter the upper shaft 5 is rotated and one pulse is obtained from the bight pulse generator 17. Accordingly, the bight counter 55 advances one position and since it is synchronized with the feed counter 77 it provides an output Q1. Therefore the switching device Qb1 of the analog switch 59 is rendered conductive. Accordingly, the voltage representative of the bight position "1" which is obtained from the junction (1) of the voltage divider circuit Rb1 is coupled by the switching device Qb1 to the bight output terminal Vbout. Accordingly, the direct current motor 43 shown in Figs. 1 and 2 is rotated in accordance with the amplitude of the bight output voltage whereby the needle bar support 49 is rotated to swing the needle 11 in the direction of arrow H to the 1 bight position. Accordingly, the needle 11 is stopped at the coordinate position of the first needle penetration in the pattern example shown in Fig. 4A.

The upper shaft 5 is further rotated and the second pulse is obtained from the feed pulse generator 19. Accordingly, the output F2 is obtained from the counter 77 and the switching device Qf2 of the analog switch 81 is turned on. Therefore, the voltage from the junction (2) of the voltage divider circuit Rf1 is applied to the output terminal Vfout of the analog switch 81, whereby the direct current motor 37 is driven. The upper shaft 5 continues to rotate and the second pulse is obtained from the bight pulse generator 17. Accordingly, the output Q2 is obtained from the counter 55. Therefore, the switching device Qb2 of the analog switch 59 is turned on. Accordingly, the voltage from the junction (1) of the voltage divider circuit Rb1 is applied through the switching device Qb2 to the output terminal Vbout. Therefore, the direct current motor 43 is driven, whereby the bight is determined. Thus, the feed voltage and the bight voltage associated with the successive needle positions of the pattern P1 are obtained in order in response to the pulse signals from the feed pulse generator 19 and the bight pulse generator 17.

After the sixth pulse representative of the final stitch in the pattern P1 is obtained from the feed pulse generator 19 and the bight pulse generator 17, the next pulse, the seventh, returns the counters 77 and 55 to the initial state, whereupon the outputs F1 and Q1 are again provided. The resetting of the counters 77 and 55 is caused by the signal from the switch decoder 53.

Although the bight resistance network 57 and the feed resistance network 79 shown in Figs. 3A and 3B each comprise a plurality of separate voltage divider circuits Rb1 through Rbn and Rf1 through Rfn, respectively, these plurality of voltage divider circuits may be arranged in a modular form by using integrated circuits (chips) containing a similar number of resistors, for example, five printed on each chip. The chips are combined as desired depending on the required performance of a sewing machine or a pattern to be sewn. Such chips have a temperature characteristic which is extremely stabilized and enhance the reliability of the circuit. Furthermore, the modular construction simplifies maintenance.

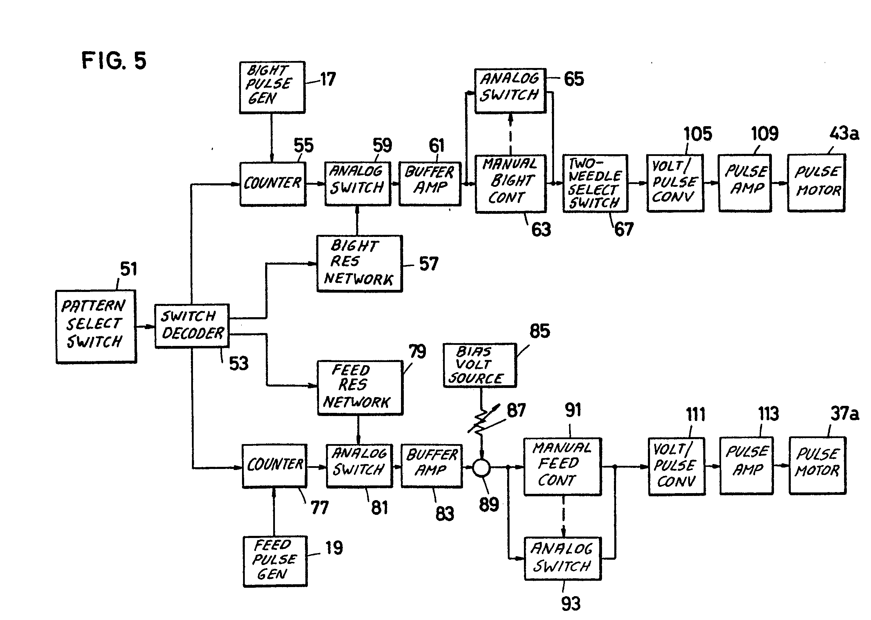

Fig. 5 shows another embodiment of the present invention wherein the elements which are similar to those in the Fig. 2 embodiment are indicated with the same reference numerals. In Fig. 5, the bight voltage and the feed voltage obtained from the analog switches 65 and 93, respectively, are applied to voltage/pulse converters 105 and 111, respectively. The voltage/pulse converters 105 and 111 convert the analog signal applied thereto into a number of pulses corresponding to the bight voltage. The outputs of these voltage/pulse converters 105 and 111 are applied to pulse amplifiers 109 and 113, respectively. The pulse outputs of these pulse amplifiers 109 and 113 are respectively applied as driving signals to the pulse motor 43a for bight control and to the pulse motor 37a for the feed control.

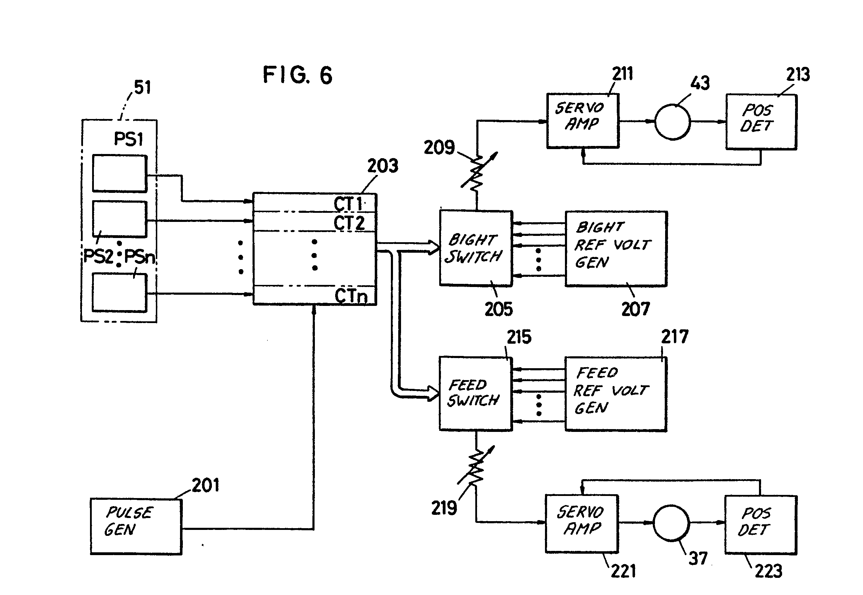

In the above described embodiments, a single bight counter 55 and a single feed counter 77 are provided for counting the stitches for the patterns to be sewn and a voltage divider is provided per each kind of pattern. Alternatively, a single voltage divider may be provided for the various kinds of patterns, while a plurality of counters, one for each kind of pattern, is provided. Such an embodiment is shown in Fig. 6.

The embodiment shown in Fig. 6 is adapted to be capable of sewing a plurality (n) of patterns. To that end, a pattern selection switch 51 is provided. The pattern selection switch 51 comprises a plurality (n) of switches PS1 through PSn, such that selective operation of any switch causes a corresponding pattern selection signal to be provided. A pattern selection signal is applied to a counter group 203 as a counter designating signal. The counter group 203 comprises a plurality of counters CT1 through CTn, one for each pattern, the particular counter associated with a particular pattern being rendered operative by the counter designating signal. The counters CT1 through CTn are supplied with a clock signal by a pulse generator 201, which may be similar to the previously described pulse generator 17 or 19. The pulse generator 201 generates one pulse for each stitch.

The signals from the operative counter in the counter group 203 are applied as switching control signals to the bight switching circuit 205 and to the feed switching circuit 215. The bight switching circuit 205 is responsive to the signal from the operative counter in the counter group 203 to selectively provide at its output one of a plurality of reference voltages supplied by the bight reference voltage generator 207. The feed switching circuit 215 is responsive to the signal from the operative counter of the counter group 203 to selectively provide at its output one of a plurality of reference voltages supplied from the feed reference voltage generator 217.

The reference voltage obtained from the bight switching circuit 205 and corresponding to the bight position is applied through a bight fine adjusting variable resistor 209 to a servo-mechanism including a servo-amplifier 211, a servo-motor 43b, and a position detecting circuit 213. The feed reference voltage is applied through a feed fine adjusting variable resistor 219 to a servo-mechanism including a servo-amplifier 221, a servo-motor 37b, and a position detecting circuit 223.

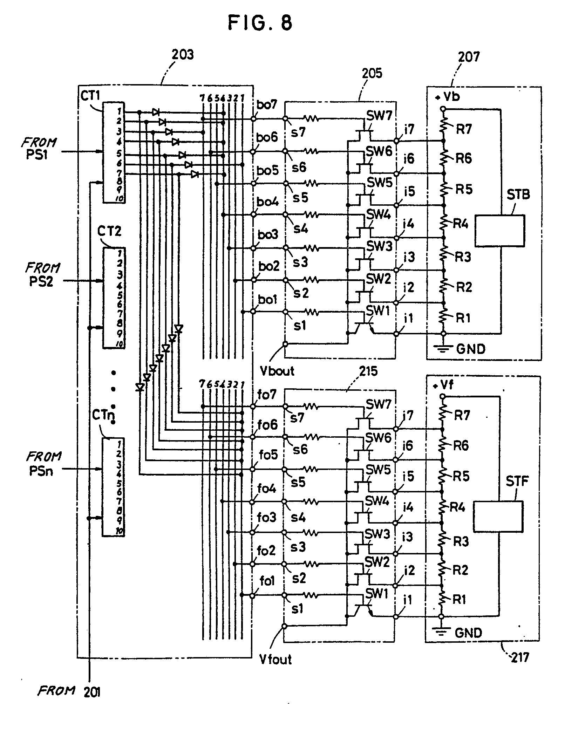

Fig. 8 shows a schematic diagram of the counter group 203, the bight switch 205, the bight reference voltage generator 207, the feed switch 215, and the feed reference voltage generator 217, shown in Fig. 6. The embodiment shows a case where the maximum bight and feed amplitude of the needle 11 is equally divided into seven, although the same may be increased or decreased as required. The counter group 203 comprises a plurality (n) of counters CT1 through CTn, which may be decimal counters, the number depending on the number of patterns. The maximum count on each counter is determined by the number of stitches in the associated pattern. The respective counters CT1 through CTn are rendered operative in response to the selection signals from the associated pattern selection switches OS1 through PSn. The operative counter steps once in response to each timing pulse from the timing pulse generator 201.

The counter group 203 comprises common bight step output terminals bo1 through bo7 and common feed step output terminals fo1 through fo7. These common output terminals bo1 through bo7 and fo1 through fo7 are individually and specifically connected to the output terminals of each counter CT1 through CTn based on the bight position and feed amount of the particular pattern associated with that counter CT1 through CTn.

The outputs bo1 through bo7 of the above described counter group 203 are connected to the respective switching input terminals S1 through S7 included in the bight switching circuit 205. The input terminals S1 through S7 of the switching circuit 205 are connected to the respective control electrodes of the switching devices SW1 through SW7. The input electrodes of the switching devices SW1 through SW7 are connected to the respective analog voltage input terminals i1 through i7 of the switching circuit 205. The output electrodes of the switching devices SW1 through SW7 are connected to the bight reference voltage output terminal Vbout of the switching circuit 205.

The bight reference voltage generator 207 comprises a stabilized voltage source STB which may be an integrated circuit. The stabilized voltage source STB is adapted to generate a direct current voltage +Vb, one output terminal of which is connected to the ground GND. A voltage divider is connected between both output terminals of the voltage source STB, which voltage divider includes seven series connected resistors R1 through R7. The grounded output terminal is connected to the voltage input terminal i1 of the switching circuit 205, the series junction between the resistors R1 and R2 is connected to the voltage input terminal i2, the junction between the resistors R2 and R3 is connected to the input terminal i3, the junction between the resistors R3 and R4 is connected to the input terminal i4, the junction between the resistors R4 and R5 is connected to the input terminal i5, the junction between resistors R5 and R6 is connected to the input terminal i6 and the junction between the resistors R6 and R7 is connected to the input terminal i7. Accordingly, each of the voltage input terminals i1 through i7 is supplied with a different bight control reference voltage.

In a like manner, as shown in Fig. 8, the counter output terminals fo1 through fo7 are connected to the respective switching input terminals S1 through S7 included in the feed switching circuit 215. The respective input terminals S1 through S7 of the switching circuit 215 are individually connected to the control electrodes of the corresponding switching devices SW1 through SW7. The input electrodes of the switching devices SW1 through SW7 are respectively connected to the analog voltage input terminals i1 through i7 of the feed switch 215. The output electrodes of the respective switching devices SW1 through SW7 are connected to the feed reference voltage output terminal Vfout of feed switch 215.

The feed reference voltage generator 215 comprises a stabilized voltage source STF which may be an integrated circuit. The stabilized voltage source STF is adapted to generate a direct current voltage +Vf, and has one output terminal connected to the ground GND. A voltage divider is connected between both output terminals of the voltage source STF which voltage divider includes seven series connected resistors R1 through R7. The grounded output terminal is connected to the voltage input terminal i1 of the switching circuit 215, the series junction of the resistors R1 and R2 is connected to the voltage input terminal i2, the junction between the resistors R2 and R3 is connected to the input terminal i3, the junction between the resistors R3 and R4 is connected to the input terminal i4, the junction between the resistors R4 and R5 is connected to the input terminal 15, the junction between the resistors R5 and R6 is connected to the input terminal i6, and the junction between the resistors R6 and R7 is connected to the input terminal i7. Accordingly, each of the voltage input terminals i1 through i7 is supplied with a different feed control reference voltage.

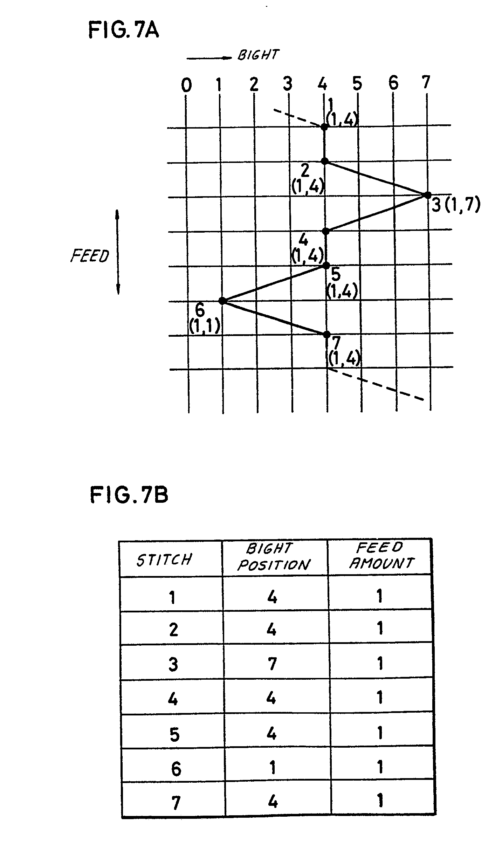

Fig. 7A shows one example of a specific pattern for explanation of the embodiment and Fig. 7B shows positional information of the pattern and the bight and feed associated therewith. In Fig. 7A, the ordinate direction shows the feed, which is constant step of "1", and the abscissa direction shows the bight position. The pattern example shown is adapted to complete one cycle stitch by seven steps or seven needle drop number. In the following, the embodiment shown in Figs. 6 and 8 will be described along with this specific pattern example. First one of the switches PS1 through PSn of the pattern selection switch 51 is selected to designate the pattern example shown in Fig. 7A. For convenience sake, it is assumed that, in the embodiment shown, the pattern shown in Fig. 7A is associated with the first counter C1.

As shown in Fig. 7B, the step sequential bight is "4", "4", "7", "4", "4", "1", "4" and so on and the feed is "1", "1", "1", and so on. Therefore, the output terminals 1 through 7 of the counter C1 are in turn connected through the common lines to the common output terminals bo4, bo4, bo7, bo4, bo4, bo1, and bo4. At the same time, the output terminals 1 through 7 of the counter C1 are connected respectively through the common lines to the common output terminal fo1, fo1, fo1, fo1, fo1, fo1 and fo1.

In a sewing operation, a power source is turned on and the switch PS1 of the pattern selection switch 51 is operated, whereby only the counter C1 is enabled and is reset. When the driving motor rotates, the upper shaft 5 rotates whereby the pulse generator 201 generates a timing pulse per each reciprocation of the needle 11.

In operation, in the first step, the output terminal 1 of the counter C1 is at the high level, while the remaining output terminals are at the low level. Therefore, only the bight common output terminal bo4 adopts the high level. Accordingly, in the first step, the switching device SW4 of the bight switching circuit 205 is turned on responsive to the high level signal from the terminal bo4. Therefore, the divided voltage Vb4 is obtained as the first step bight reference voltage from the reference voltage output terminal Vbout of the switching circuit 205. At the same time, only the feed common output terminal fo1 adopts the high level. Accordingly, in the first step, the switching device SW1 of the feed switching circuit 215 is turned on responsive to the high level signal from the terminal fo1. Therefore, the ground voltage Vf1 is obtained as the first step feed reference voltage from the reference voltage output terminal Vfout of the switching circuit 215. The first step bight reference voltage obtained from the bight switching circuit 205 is applied through the variable resistor 209 to the servo-amplifier 211. The first step feed reference voltage obtained from the feed switching circuit 215 is applied through the variable resistor 219 to the servo-amplifier 211. Therefore, the bight controlling servo-motor 43b is rotated by the angle associated with the bight position "4", i.e. the reference voltage Vb4, whereby the swing width in the arrow H direction of the needle 11 in Fig. 1 is controlled. The feed controlling servo-motor 37b is rotated by the angle associated with the feed amount "1", i.e. the reference voltage Vf1, whereby the displacement amount in the arrow E direction of the feed dog 13 in Fig. 1, is controlled.

When the first step sewing operation thus described is completed, a second step timing pulse is obtained from the timing pulse generator 201. Accordingly, the output terminal 2 of the counter C1 adopts the high level. Therefore, the same operation as the first step is carried out. The same operation is repeated for seven steps. The counter is reset by the eighth timing pulse. In case of a one-cycle pattern stitch, the counter may be adapted such that the driving motor is stopped at the end of one cycle.

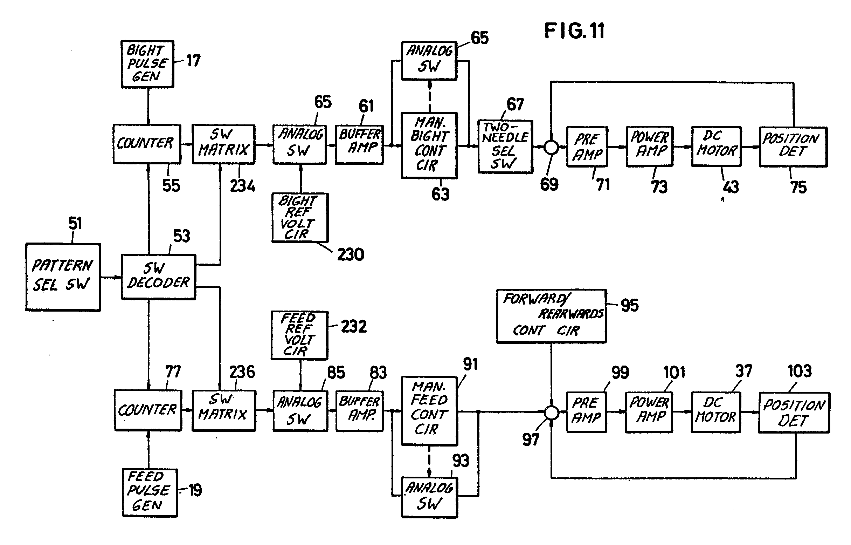

In the embodiment shown in Figs. 11 to 14, wherein parts similar to those in Fig. 2 are indicated with the same reference numerals, a single voltage divider 230 and a single bight counter 55 are provided in bight circuit and a single voltage divider 232 and a single feed counter 77 are provided in the feed circuit. Programming of the bight and feed voltages for the various patterns is provided by a pair of switch matrices 234 and 236.

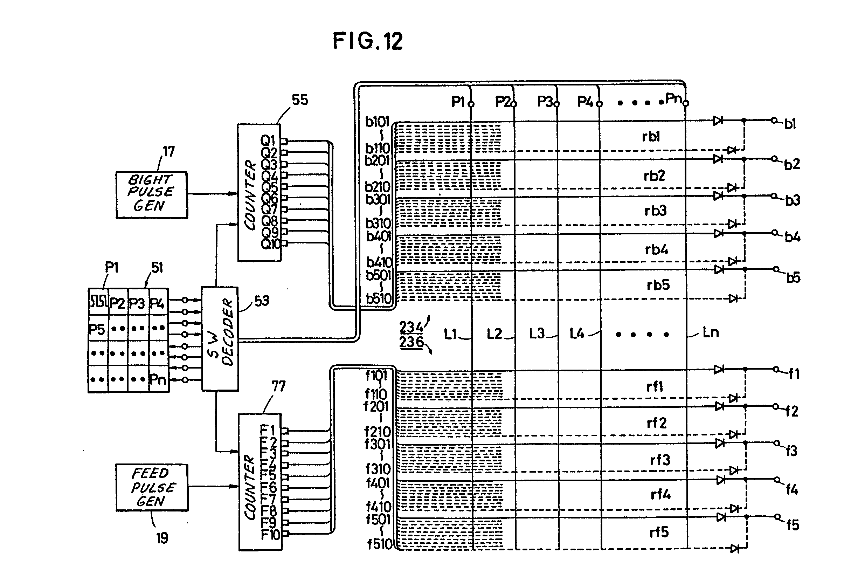

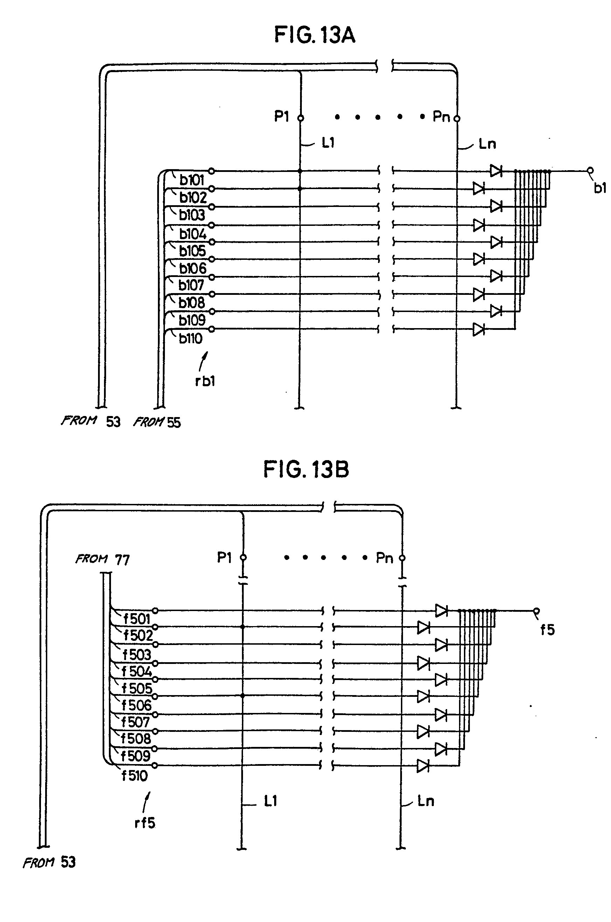

As shown in Figs. 12 and 13, the bight switch matrix 234 and the feed switch matrix 236 include common column lines L1 to Ln. The column lines L1 to Ln correspond to the respective patterns P1 to Pn selectable by the pattern selection switch 51 and are enabled or supplied with a voltage by the above described signals P1 to Pn only when the pattern is selected. The bight switch matrix 234 comprises five sets rb1 to rb5 of the row lines. The feed switch matrix 236 comprises five sets rf1 to rf5 of the row lines. Each of the sets rb1 to rb5 and rf1 to rf5 of row lines includes ten row lines b101—b110 to b501—b510 and f101—f110 to f501—f510 corresponding to the number of outputs of the counters 55 and 77, i.e. the maximum stitch number in one cycle of the pattern. The respective row lines b101 to b510 and f101 to f510 are connected to the column lines L1 to Ln in different manners for each of the column lines L1 to Ln to thereby implement a logical product switch matrices 234 and 236. Figs. 13A and 13B show in more detail one of the sets of each of these matrices 234 and 236. Each connection between a row line and a column line, while being shown as a dot for convenience of illustration, is a field effect transistor with its gate electrode connected to the input of the row line, its source electrode connected to the control line, and its drain or output electrode connected to the output of the row line.

As shown in Fig. 12, the outputs Q1 to Q10 of the counter 55 are respectively connected to the corresponding row lines B101 to B110 of the first set rb1, to the corresponding row lines b201 to b210 of the second set rb2, to the corresponding row lines b301 to b310 of the third set rb3, to the corresponding row lines b401 to b410 of the fourth set rb4, and to the corresponding row lines b501 to b510 of the fifth set rb5. Likewise, the outputs F1 to F10 of the counter 77 are respectively connected to the corresponding row lines f101 to f110 of the first set rf1, to the corresponding row lines f201 to f210 of the second set rf2, to the corresponding row lines f301 to f310 of the third set rf3, to the corresponding row lines f401 to f410 of the fourth set rf4, and to the corresponding row lines f501 to f510 of the fifth set rf5. Accordingly, each time the corresponding counters 59 and 77 make a stepping operation, the corresponding row lines of the respective sets rb1 to rb5 and rf1 to rf5 are commonly designated. The logical product outputs of the intersections between the respective sets rb1 to rb5 and rf1 and rf5 of the row lines and the column lines L1 to Ln are supplied to the terminals b1 to b5 and f1 to f5 which, in turn, are applied to the corresponding analog switches 65 and 85.

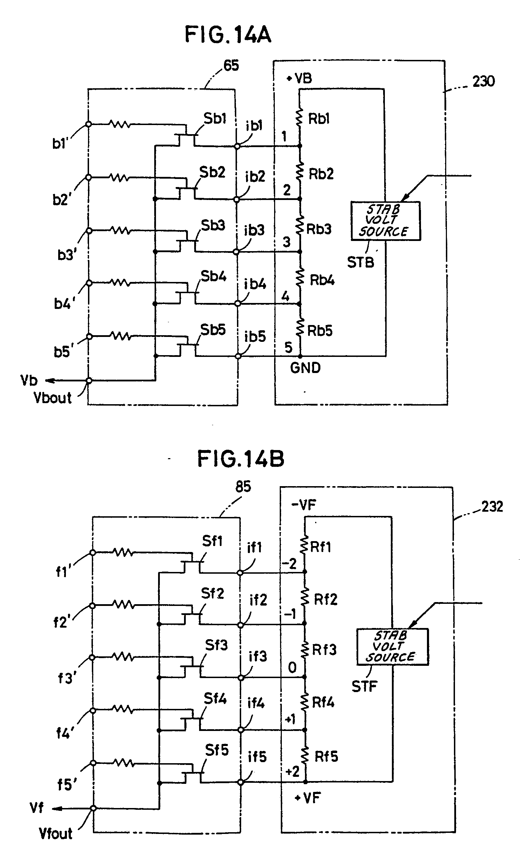

Now referring to Figs. 14A and 14B, the bight reference voltage circuit 230, the analog switch 65, the feed reference voltage circuit 232 and the analog switch 85 will be described in detail. In the embodiment shown in Fig. 14A, the maximum amplitude of the bight of the sewing needle 11 is equally divided into five, although the number may be increased or decreased as necessary.

The bight switch matrix 234 comprises five bight output terminals b1 to b5, which are correspondingly and individually connected to the switching input terminals b1' to b5' included in the bight analog switch 65. The respective input terminals b1' to b5' of the analog switch 65 are individually connected to the control electrodes of the corresponding switching devices Sb1 to Sb5, which may be field effect transistors. The respective input electrodes of the switching devices Sb1 to Sb5 are individually connected to the respective analog voltage input terminals ib1 to ib5 from the respective resistor dividing points of the bight reference voltage circuit 230. The respective output electrodes of the switching devices Sb1 to Sb5 are commonly connected to the bight output voltage terminal Vbout of the analog switch 65.

The bight reference voltage circuit 230 comprises a stabilized voltage source STB implemented, for example, in an integrated circuit. The stabilized voltage source STB is structured to produce a direct current voltage +VB at one output terminal, while the other output terminal is connected to the ground GND. A series connection of five voltage dividing resistors Rb1 to Rb5 is connected between the output terminals of the voltage source STB. The junction between resistors Rb1 and Rb2 is connected to the voltage input terminal ib1 of the analog switch 65, the junction between the resistors Rb2 and Rb3 is connected to the voltage input terminal ib2, the junction between the resistors Rb3 and Rb4 is connected to the input terminal ib3, the junction between the resistors Rb4 and Rb5 is connected to the input terminal ib4, and the junction between the resistor Rb5 and the ground GND is connected to the input terminal ib5. Accordingly, the voltage input terminals ib1 to ib5 are supplied with a plurality of different reference voltages for bight control. The input terminal ib1 is supplied with a voltage corresponding to the bight coordinate "1" of the stitches, the input terminal ib2 is supplied with a voltage corresponding to the bight coordinate "2", the input terminal ib3 is supplied with a voltage corresponding to the bight coordinate "3", the input terminal ib4 is supplied with a voltage corresponding to the bight coordinate "4", and the input terminal ib5 is supplied with a voltage corresponding to the bight coordinate "5".

Fig. 14B shows a case where the maximum feed amount is equally divided into five, although the number may be increased or decreased as necessary. The feed switch matrix 236 comprises five feed output terminals f1 to f5, which are correspondingly and individually connected to the switching input terminals f1′ to f5′ included in the feed analog switch 85. The details of the analog switch 85 and the reference voltage circuit 232 is substantially the same as that for bight shown in Fig. 14A and therefore a detailed description is omitted. The input terminal if1 is supplied with a voltage corresponding to the feed amount "−2" for each stitch, the input terminal if2 is supplied with a voltage corresponding to the feed amount "−1", the input terminal if3 is supplied with a voltage corresponding to the feed amount "0", the input terminal if4 is supplied with a voltage corresponding to the feed amount "+1", and the input terminal if5 is supplied with a voltage corresponding to the feed amount "+2".

In the embodiment shown, the bight is controlled in terms of an absolute coordinate position and the feed is controlled in terms of a relative amount. Also, the sign of minus for the feed amount indicates backward feed, while the sign of plus for the feed amount indicates forward feed. Thus, the analog switch 65 serves to provide a voltage developed in the bight reference voltage circuit 230 as a bight voltage corresponding to the coordinate position for each stitch. The analog switch 85 serves to provide a feed voltage corresponding to the coordinate position or the feed amount for each stitch.

In the embodiment illustrated in Fig. 12, the row lines b101 to b510 are connected to the column line L1 to provide the bight voltages for the pattern P1 shown in Fig. 4A and the row lines f101 to f510 are connected to the column line L1 to provide the feed voltages for the pattern P1 shown in Fig. 4A. In the first stitch, the bight is the lowest, as viewed in Fig. 4A. The feed is in a still state without any shift forward and rearward, or leftward and rightward as viewed in the figure, from the immediately preceding stitch, i.e. the six stitch, and thus the feed is "0". Accordingly, the column line L1 corresponding to the pattern P1 of the feed switch matrix 236 and the row lines f301 corresponding to the first stitch are connected in a logical product fashion. The column line L1 of the bight switch matrix 234 and the row line b101 are similarly connected.

In the second stitch, the bight remains the same "1" as the first stitch and the feed advances relatively by the unit "2" from the first stitch and thus the feed is "+2". Accordingly, the column line L1 of the matrix 236 and the row line f502 corresponding to the second stitch are connected in a logical product manner, and the column line L1 and the row line b102 are connected in a logical product fashion.

In case of the third stitch of the pattern, the feed amount is the same as that of the second stitch and remains "0", and the bight is in the position of "3". Accordingly, the column line L1 of the matrix 236 and the row line f103 are connected in a logical product manner and the column line L1 and the row line b303 of the matrix 234 are connected in a logical product manner.

Similarly, the positional data of the bight and feed from the fourth to the sixth can be shown by the numerical values shown in Fig. 4B.

The operation of the embodiment shown in Figs. 11 to 14 will be described in the following. First, a pattern being sewn is selected by the pattern selection switch 51. Let it be assumed that the pattern P1, i.e. the pattern example shown in Fig. 4A is selected by way of an example. Accordingly, the pattern signal P1 representing the pattern is obtained from the switch decoder 53. Therefore, the high level voltage is applied only to the column line L1 of the switch matrices 234 and 236. The remaining column lines L2 to Ln are not supplied with any voltage. Thus, only the column line L1 corresponding to the pattern P1 is rendered active or effective. The foot controller pedal is then depressed, whereby a driving motor is rotated. Accordingly, the upper shaft 5 starts rotating and the bight pulse generator 17 and the feed pulse generator 19 are rendered in an operative state. Responsive to selection of the pattern P1 by means of the pattern selection switch 51, a signal indicating the number of stitches in one cycle of the pattern, or the number "6" in the embodiment shown is obtained from the switch decoder 53 and is applied to the counters 55 and 77. Accordingly, these counters 55 and 57 are preset to serve as a 6-nary counter.

As the drive motor, not shown, rotates, one pulse is obtained from the feed pulse generator 19. Accordingly, the feed counter 77 counts the pulse to provide the output F1. Accordingly, the row lines f101, f201, f301, f401, and f501 of the respective row line sets rf1 to rf5 of the matrix 236 are commonly supplied with the high level. The column line L1 and the row line f301 are connected as shown in Figs. 12 and 13B. Therefore, a high level switching signal is obtained from the row line f301 and thus from the terminal f3. Accordingly, the switching devices Sf3 of the analog switch 85 shown in Fig. 14B is turned on. Therefore, the voltage corresponding to the feed amount "0" obtainable from the feed reference voltage circuit 232 is supplied through the conducting switching device Sf3 to the feed voltage terminal Vfout. Since the voltage obtainable at the output terminal Vfout is a voltage indicating the feed "0", the direct current motor 37 shown in Figs. 1 and 2 does not rotate. Accordingly, the feed dog 13 shown in Fig. 1 does not feed the cloth.

The upper shaft 5 is further rotated and a further pulse is obtained from the bight pulse generator 17. Accordingly, the counter 55 counts pulse to provide the output Q1. There-

fore, the row lines b101, b201, b301, b401 and b501 of the row line sets rb1 to rb5 of the matrix 234 are commonly supplied with the high level. The column line L1 and the row line b101 are connected as shown in Figs. 12 and 13A. Therefore, a high level switching signal is obtained from the row line b101 and thus from the terminal b1. The switching device Sb1 of the analog switch 65 shown in Fig. 14A is turned on. A voltage corresponding to the bight amount "1" obtainable from the bight reference voltage circuit 230 is supplied through the conducting switching device Sb1 to the bight output terminal Vbout. The direct current motor 43 shown in Figs. 1 and 2 is rotated by the voltage, whereby the needle bar support is rotated and thus the sewing needle 11 is swung in the arrow H direction. Accordingly, the sewing needle is brought to the position of the first stitch of the pattern example shown in Fig. 4A.

The upper shaft 5 is further rotated and the second pulse is obtained from the feed pulse generator 19. The output F2 is obtained from the counter 77 and the switching device Sf5 of the analog switch 85 is turned on. Accordingly, a voltage corresponding to the feed amount "+2" obtainable from the reference voltage circuit 232 is withdrawn at the output terminal Vfout of the analog switch 85, whereby the direct current motor 37 is driven thereby. The upper shaft 5 is further rotated and the second pulse is obtained from the bight pulse generator 17. The output Q2 is obtained from the counter 55. The switching device Sb1 of the analog switch 65 is turned on. Accordingly, a voltage corresponding to the bight amount "1" obtainable from the reference voltage circuit 230 is withdrawn through the switching device Sb1 at the output terminal Vbout. As a result, the direct current motor 43 is driven and the bight width is determined. Thus, the feed voltage and the bight voltage associated with the stitch are withdrawn responsive to the pulse signals for each stitch obtainable from the feed pulse generator 19 and the bight pulse generator 17. The direct current motor 37 for controlling the feed and the direct current motor 43 for controlling the bight are driven thereby, whereby a prescribed feed amount and the bight width are achieved.

When the sixth pulse indicating the final stitch of the pattern P1 is obtained from the feed pulse generator 19 and the bight pulse generator 17, the counters 77 and 55 return to the initial state, whereupon the outputs F1 and Q1 are obtained responsive to the seventh pulse. This is achieved by the presetting function of the switch decoder 53.

In the embodiment shown in Figs. 11 to 14, the number of divisions of the coordinates for the feed and bight was five. If the number of divisions of the coordinate is selected to be the same for the feed and for the bight, the means for generating the different voltages including the stabilized voltage source can be commonly utilized for both the feed and bight.

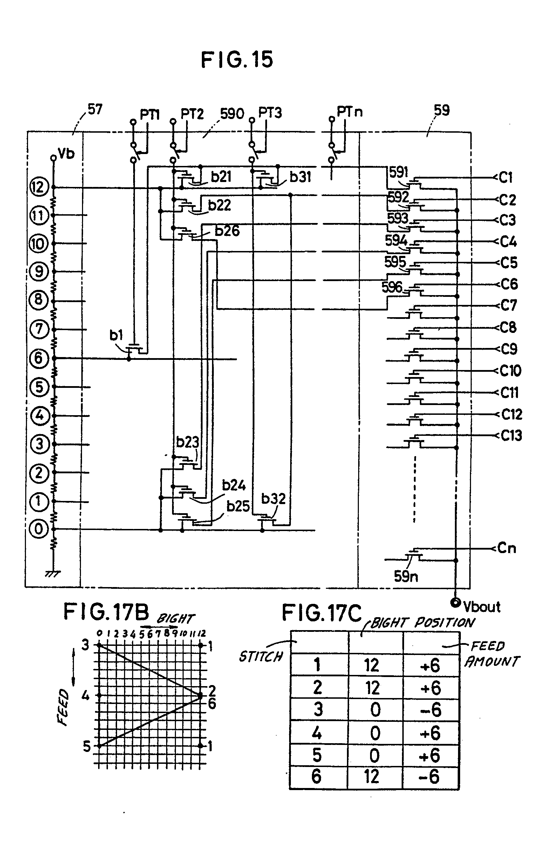

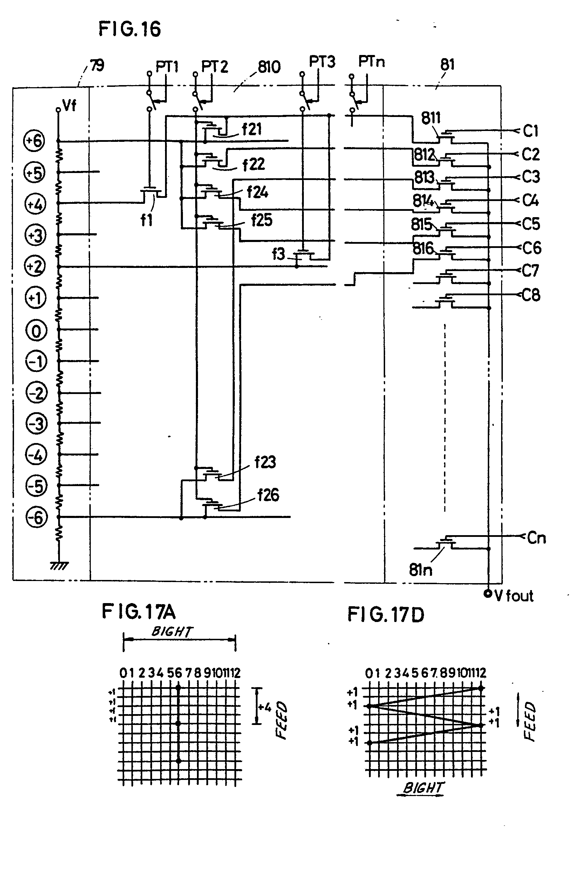

Figs. 15 and 16 show embodiments of circuits which may be utilized in place of the bight resistor network 57 and the analog switch 59 shown in Fig. 2. Similar circuits may be substituted for the feed resistor network 79 and the analog switch 81. Referring to Fig. 15, the analog switch 59 further comprises an analog switch group 590. Referring to Fig. 16, the analog switch 81 further comprises an analog switch group 810. The embodiment shown has been configured in such a circuit that is capable of sewing three patterns P1, P2 and P3 as shown in Figs. 17A, 17B and 17D. The bight resistor network or resistor chain 57 comprises a series connection of say twelve resistors, in which one end of the series connection is connected to the ground while the other end of the series connection is connected to receive a bight voltage Vb from a stabilized voltage source, not shown. The bight resistor network or resistor chain 57 comprises junctions (0) to (12) corresponding to the bight coordinate positions 0 to 12 shown in Figs. 17A, 17B and 17D. The first bight analog switch group 590 comprises one or more analog switches for each of the patterns P1, P2 and P3. For example, the pattern P1 is a straight stitch pattern as shown in Fig. 17A and to that end only one analog switch b1 is provided. The pattern P2 is a stretch stitch pattern as shown in Fig. 17B and to that end six analog switches b21, b22, b23 ... b26 are provided. The pattern P3 is a zigzag stitch pattern shown in Fig. 17D and to that end two analog switches b31 and b32 are provided. Accordingly, the switch which is turned on responsive to the signal PT1 from the switch decoder 53 is connected to a gate of the above described analog switch b1. The switch which is turned on responsive to the signal PT2 obtained from the switch decoder 53 is commonly connected to the gates of the analog switches b21, b22, b23 ... b26. The switch which is turned on responsive to the signal PT3 obtained from the switch decoder 53 is connected to the gates of the above described analog switches b31 and b32. On the other hand, the second bight analog switch group 59 comprises a plurality (n) of analog switches 591, 592, 593 ... 59n. The analog switch group 59 is implemented by the analog switches of the number n corresponding to the stitches of the pattern having the largest number of stitches among the plurality of patterns being sewn. The respective analog switches 591 to 59n are supplied with the count signals C1 to Cn from the bight counter 55 shown in Fig. 2 to be enabled. The outputs of the respective analog switches 591 to 59n are commonly connected to the bight voltage withdrawing terminal Vbout.

More specifically, the input of the analog switch b1 corresponding to the pattern P1 included in the bight analog switch group 590 is connected to the junction ⑥ of the bight resistor chain 57 and the output of the analog switch b1 corresponding to the pattern P1 is connected to the input of the analog switch 591 included in the bight analog switch group 59. Similarly, the analog switches b21, b22, b23, b24, b25 and b26 corresponding to the pattern P2 have the respective inputs connected to the junctions ⑫, ⑫, ⓪, ⓪, ⓪ and ⑫ of the bight resistor chain 57 and the respective outputs connected to the input of the analog switch 591, the input of the analog switch 592, the input of the analog switch 593, the input of the analog switch 594, the input of the analog switch 595 and the input of the analog switch 596 included in the analog switch group 59. The inputs of the analog switches b31 and b32 corresponding to the pattern P3 are connected to the junctions ⑫ and ⓪ of the bight resistor chain 57 and the outputs of the analog switches b31 and b32 corresponding to the pattern P3 are connected to the inputs of the analog switches 591 and 592 of the above described analog switch group 59. Such connection of the bight analog switch group 590 will be better understood with reference to the respective pattern diagrams shown in Figs. 17A, 17B and 17D.

The feed analog switch group 810, the feed resistor network or resistor chain 79 and the feed analog switch group 81 may be similarly structured. More specifically the feed resistor chain 79 comprises a series connection of twelve resistors, in which one end of the series connection is connected to the ground while the other end of the series connection is connected to receive a feed voltage Vf from a stabilized voltage source, not shown. The junctions ⑥̄, ⑤̄, ④̄, ③̄, ②̄, ①̄, ⓪, ⊕1, ⊕2, ⊕3, ⊕4, ⊕5 and ⊕6 are adapted to generate voltages corresponding to the feed amounts as shown in Figs. 17A, 17B and 17D. The feed analog switch group 810 has an analog switch f1 corresponding to the pattern P1, analog switches f21, f22, f23 ... f26 corresponding to the pattern P2 and an analog switch f3 corresponding to the pattern P3. The feed analog switch group 81 comprises a plurality (n) of analog switches 811 to 81n as in the case of the previously described bight analog switch group 59, such that the respective analog switches 811 to 81n are controlled responsive to the count signals C1 to Cn of the feed counter 77 shown in Fig. 2. The outputs of the respective analog switches 811 to 81n included in the feed analog switch group 81 are commonly connected to the feed voltage withdrawing terminal Vfout. The input of the analog switch f1 included in the feed analog switch group 810 is connected to the junction ⊕4 of the feed resistor chain 79 and the output of the analog switch f1 is connected to the input of the analog switch 811 of the analog switch group 81. The inputs of the analog switches f21, f22, f23, f24, f25 and f26 are connected to

the junctions ⊕6, ⊕6, ⊖6, ⊕6, ⊕6 and ⊖6, respectively, of the resistor chain 79 and the outputs of the analog switches f21 to f26 are connected to the inputs of the analog switches 811, 812, 813, 814, 815 and 816, respectively. The input of the analog switch f3 is connected to the junction ⊕2 of the resistor chain 79 and the output of the analog switch f3 is connected to the input of the analog switch 811.

A bight voltage corresponding to the coordinate position for each stitch is withdrawn from the bight voltage withdrawing terminal Vbout of the about described bight analog switch group 59. On the other hand, a feed voltage corresponding to a feed amount for each stitch is withdrawn from the feed voltage withdrawing terminal Vfout of the feed analog switch group 81.

Now that the structural features have been described, an operation of the embodiment will be described in the following. In operation, by way of an example, description will be made of a case in which a stretch stitch pattern as shown in Fig. 17B is to be sewn. To that end, first the pattern selection switch P2 corresponding to the stretch stitch pattern P2 included in the pattern selection switch 51 is depressed. Then a signal having information of the stitch number of the stretch stitch pattern n=6 is fed to the bight counter 55 and the feed counter 77. At the same time, the signal PT2 corresponding to the pattern P2 is withdrawn from the switch decoder 53. The switch of the bight analog switch group 590 and the switch of the feed analog switch group 810 are turned on responsive to the signal PT2. If and when these switches are turned on, the signal is applied to the gates of the analog switches b21, b22, b23 ... b26, so that these analog switches b21 to b26 are turned on. The analog switches f21, f22, f23 ... f26 of the feed analog switch group 810 are also turned on.

If and when the main shaft is rotated in such a situation, the bight pulse and the feed pulse are in succession generated by the bight pulse generator 17 and the feed pulse generator 19, respectively, in association with rotation of the main shaft 5 (Fig. 1). The bight pulse is applied to the bight counter 55 and the feed pulse is applied to the feed counter 77. Considering a case where the main shaft 5 makes one rotation, the counters 55 and 77 both make a counting operation of "1", so that the signal C1 is obtained. Accordingly, the analog switch 591 of the bight analog switch group 59 and the analog switch 810 of the feed analog switch group 81 are turned on. Therefore, a voltage obtained from the junction ⑫ of the bight resistor chain 57 through the analog switch b21 is withdrawn from the analog switch 591 and thus from the bight voltage withdrawing terminal Vbout. At the same time, a voltage obtained from the junction ⊕6 of the feed resistor chain 79 through the analog switch f21 is withdrawn from the analog switch 811 of the feed analog switch group 81 and thus from the feed voltage withdrawing terminal Vfout. Therefore, the direct current motors 43 and 37 are rotated responsive to the bight voltage and the feed voltage.

When the main shaft 5 is rotated two times, the bight counter 55 and the feed counter 77 both make a count operation of "2", thereby to provide the signal C2. Accordingly a voltage obtained from the junction (12) of the bight resistor chain 57 through the analog switches b22 and 592 is withdrawn from the bight voltage withdrawing terminal Vbout. A voltage obtained from the junction (+6) of the feed resistor chain 79 through the analog switches f22 and 812 is withdrawn from the feed voltage withdrawing terminal Vfout. Accordingly, again the direct current motors 43 and 37 are controllably driven.

Thereafter the main shaft 5 is similarly rotated three to six times, while the bight coordinate position and the feed amount as shown in Fig. 17C are attained, thereby to complete one cycle of the stretch stitch pattern.

The same applies to the straight stitch operation as shown in Fig. 17A. In the case where the feed amount is constant ((+2) in the zigzag stitch pattern) as in case of such a zigzag stitch pattern as shown in Fig. 17D, it would be appreciated that since the number of the first feed analog switches may be one irrespective of the number of stitches of the pattern the signal from the switch decoder 53 to the feed counter 77 may be a signal of the count number "1" irrespective of the number of stitches of the pattern to sew a zigzag stitch pattern.

It should be pointed out that such stitch patterns are shown only by way of an illustration and any other various patterns may be sewn with simplicity by properly changing the structure and connection of the analog switch group.

Various changes and modifications may be made in the above described apparatus without deviating from the scope of the present invention. For example, while a voltage divider circuit including resistors is employed for obtaining a plurality of reference voltages, other types of circuits may be employed. In addition, although direct current motors, pulse motors or servo-motors are employed as displacement controlling means, solenoids may be employed.

**Claims**

1. A sewing machine having feed means (13, 31 to 35, 37, 83 to 103) operable to feed cloth being sewn, and bight means (43, 45 to 49, 61 to 75) for swinging a sewing needle in a direction transverse to the cloth feeding direction, the bight and feed means each having displacement controlling means (57, 59; 79, 81) for controlling the respective displacements caused thereby during sewing so as to produce a predetermined stitch pattern, each displacement controlling means comprising pattern determining means (59; 81) coupled to a plurality of count terminals (Q1 to Q10; F1 to F10) of a counter means (55; 77) for receiving therefrom a digital count signal indicative of the next stitch to be sewn, and a voltage generator (57; 79) for generating an analog reference voltage under the control of the pattern determining means (59; 81) for causing an appropriate displacement for said next stitch, characterised in that the voltage generator (57; 79) is formed by a voltage divider (Rb1; Rf1) comprising a series connection of a plurality of resistor components (Rb11 to Rb19; Rf11 to Rf19) coupled to receive a predetermined voltage across the ends of said series connection, said voltage divider (Rb1; Rf1) having a plurality of taps ((1), (2), etc.) for supplying respective analog reference voltages, in that the counter means (55; 77) is arranged to produce an output signal at a single, respective one of said count terminals (Q1 to Q10; F1 to F10) for each stitch of the pattern, and in that said pattern determining means (59; 81) comprises a plurality of connection means (Qb1 to Qb10; Qf1 to Qf10) each coupled between a respective count terminal (Q1 to Q10; F1 to F10) and a selected one of said taps ((1), (2), etc.) so that a signal appearing at said count terminal causes the generation of the reference voltage corresponding to said one tap.

2. A sewing machine as claimed in claim 1, wherein each said connection means includes a switch means (Qb1 to Qb10; Qf1 to Qf10) coupled to receive a reference voltage from a tap ((1), (2), etc.) and actuated by a signal at a respective count terminal (Q1 to Q10; F1 to F10) to deliver said reference voltage to a common output terminal (Vbout; Vfout).

3. A sewing machine as claimed in claim 2, wherein each of said switch means (Qb1 to Qb10; Qf1 to Qf10) comprises a field effect transistor.

4. A sewing machine as claimed in claim 1, wherein the voltage generator (Fig. 8: 205, 207; 215, 217) includes switch means (SW1 to SW7) each responsive to a signal appearing at a respective voltage generator terminal (s1 to s7) for delivering the analog reference voltage at a respective tap to a common output terminal (Vbout; Vfout), each said connection means being coupled to a selected tap via a respective voltage generator terminal (s1 to s7) and switch means (SW1 to SW7) so that a signal at the respective count terminal actuates the switch means (SW1 to SW7).

5. A sewing machine as claimed in any preceding claim, wherein said series connection of resistor components (Rb11 to Rb19; Rf11 to Rf19) is formed by a plurality of resistor elements formed on a chip.

6. A sewing machine as claimed in any preceding claim, including a stabilized voltage source (Fig. 8: STB; STF) for supplying a stabilized voltage across said series connection.

7. A sewing machine as claimed in any preceding claim, wherein said counter means (55; 77) has a maximum count equal to the number of stitches in the pattern.

8. A sewing machine as claimed in any preceding claim, including time signal generator means (17; 19) responsive to the rotation of a main shaft driving the needle of the sewing machine for providing timing signals to be counted by said counter means (55; 77).

9. A sewing machine as claimed in any preceding claim, wherein said counter means (55; 77) comprises a feed counter (77) for the pattern determining means (81) of said feed displacement controlling means (79, 81), and a bight counter (55) for the pattern determining means (59) of the bight displacement controlling means (57, 59).

10. A sewing machine as claimed in claim 9 when dependent upon claim 8, wherein said timing signal generating means (17; 19) comprises feed timing signal generating means (19) for providing timing signals to said feed counter (77) and bight timing signal generating means (17) for providing timing signals for said bight counter (55).

11. A sewing machine as claimed in any one of claims 1 to 8, wherein said counter means comprises a common counter (Fig. 8, CT1) for both of said pattern determining means (59 and 81).

12. A sewing machine as claimed in any preceding claim, wherein the feed displacement controlling means and the bight displacement controlling means have a common voltage generator.

13. A sewing machine as claimed in any preceding claim, comprising pattern selecting means (51) for selecting a desired one of a plurality of different stitch patterns to be sewn by the machine.

14. A sewing machine as claimed in claim 13, wherein each said displacement controlling means (57, 59; 79, 81) comprises a plurality of voltage generators (Rb1 to Rbn, Rf1 to Rfn) each associated with a respective one of said plurality of patterns, said pattern selecting means (51) being operable to enable a selected one of said voltage generators.

15. A sewing machine as claimed in claim 13, including a plurality of said counter means (Fig. 8, CT1 to CTn) each associated with a respective stitch pattern, said pattern selecting means (51) being operable to select one of said counter means for operation.

16. A sewing machine as claimed in claim 13, wherein each said connection means (e.g. Fig. 15, 591, b1) of a pattern determining means includes a switching device (b1) to enable operation of the connection means only when the respective pattern is selected by said selecting means (51).

17. A sewing machine as claimed in claim 13, wherein each said displacement controlling means comprises a matrix (Fig. 12: 234; 236) including a plurality of column lines (L1 to Ln) and a plurality of sets of row lines (Rb1 to Rb5; Rf1 to Rf5), the number of sets of row lines corresponding to the number of reference voltages, and each set of row lines being connected to a respective voltage generator terminal, and wherein each pattern determining means is formed by the selective coupling of a respective column line with said row lines.

18. A sewing machine as claimed in claim 17, wherein the number of row lines in each set (Rb1 to Rb5; Rf1 to Rf5) corresponds to the maximum number of stitches in a pattern.

19. A sewing machine as claimed in any preceding claim, wherein each of said feed and bight means comprises servo-amplifier means (99, 101; 71, 73) coupled to receive a respective control voltage, servo-motor means (37; 43) coupled to be energized by the output of said servo-amplifier means, and position detecting means (103; 75) coupled to said servo-motor means for detecting a rotational position of said servo-motor means for feeding back the output to said servo-amplifier means.

20. A sewing machine as claimed in any one of claims 1 to 18, wherein each of said feed and bight means includes voltage/pulse converting means (111; 105) responsive to a respective control voltage for converting said control voltage into a train of pulses the number of which is associated with said control voltage, and pulse motor means (37a; 43a) coupled to said voltage/pulse converter means to be energized by the pulses from said voltage/pulse converter means.

**Patentansprüche**

1. Nähmaschine mit einer Transporteinrichtung (13, 31—35, 37, 83—103) zum Transportieren zu nähenden Stoffes, und mit einer Schwenkeinrichtung (43, 45—49, 61—75) zum Hin- und Herschwenken einer Nähnadel rechtwinklig zur Stofftransportrichtung, wobei die Transport- und die Schwenkeinrichtung jeweils eine Verschiebungssteuerung (75, 59; 79, 81) zum Steuern der jeweiligen Verschiebungen wâhrend des Nähens aufweisen, um ein vorgegebenes Stichmuster zu erzeugen, wobei jede Verschiebungssteuerung eine Musterfestlegeeinrichtung (59; 81) aufweist, die mit mehreren Zählanschlüssen (Q1—Q10; F1—F10) eines Zählers (55; 77) verbunden sind, um von diesen ein digitales Zählsignal zu erhalten, das den nächsten zu nähenden Stich anzeigt, und mit einem Spannungserzeuger (57; 79) zum Erzeugen einer analogen Bezugsspannung unter Steuerung durch die Musterfestlegeeinrichtung (59; 81) zum Hervorrufen der passenden Verschiebung für den nächsten Stich, dadurch gekennzeichnet, daß der Spannungserzeuger (57; 79) aus einem Spannungsteiler (Rb1; Rf1) gebildet ist, der eine Reihenschaltung mehrerer Widerstände (Rb11—Rb19; Rf11—Rf19) aufweist, die miteinander verbunden sind und an den Enden der Reihenschaltung eine vorgegebene Spannung erhalten, welcher Spannungsteiler (Rb1; Rf;) mehrere Abgriffe (①, ②, usw.) aufweist, die die jeweiligen analogen Bezugsspannungen liefern, daß der Zähler (55; 77) so aufgebaut ist, daß er ein Ausgangssignal an einem jeweils einzelnen der Zählanschlüsse (Q1—Q10; F1—F10) für jeden Stich des Musters abgibt, und daß die Musterfestlegeeinrichtung (59; 81) mehrere Anschlußeinrichtungen (Qb1—Qb10; Qf1—Qf10) aufweist, die jeweils zwischen einen Zählanschluß (Q1—Q10; F1—F10) und einen ausgewählten Abgriff (①, ②, usw.) geschaltet sind, so daß ein am Zählausgang auftretendes Signal das Erzeugen derjenigen Bezugsspannung hervoruuft, das dem Abgriff entspricht.

2. Nähmaschine nach Anspruch 1, dadurch gekennzeichnet, daß die Verbindungseinrichtung eine Schalteinrichtung (Qb1—Qb10; Qf1—Qf10) aufweist, die von einem Abgriff (①, ②, usw.) eine Bezugsspannung erhält und durch ein Signal an einem zugehörigen Zählanschluß (Q1—Q10; F1—F10) veranlaßt, die Bezugsspannung an einen gemeinsamen Ausgangsanschluß (Vbout; Vfout) abgibt.

3. Nähmaschine nach Anspruch 2, dadurch gekennzeichnet, daß die Schalteinrichtung (Qb1—Qb10; Qf1—Qf10) einen Feldeffekttransistor aufweist.

4. Nähmaschine nach Anspruch 1, bei der der Spannungserzeuger (Fig. 8: 205, 207; 215, 217) eine Schalteinrichtung (SW1—SW7) aufweist, die jeweils auf ein Signal anspricht, das an einem zugehörigen Spannungsgeneratoranschluß (s1—s7) auftritt, und die analoge Bezugsspannung an einem zugehörigen Abgriff an einen gemeinsamen Ausgangsanschluß (Vbout; Vfout) abgibt, wobei jede Verbindungseinrichtung mit einem ausgewählten Abgriff über einen zugehörigen Spannungserzeugeranschluß (s1—s7) und Schalteinrichtungen (SW1—SW7) verbunden ist, so daß das Signal am jeweiligen Zählanschluß die Schalteinrichtung (SW1—SW7) betätigt.

5. Nähmaschine nach einem der vorstehenden Ansprüche, bei der die Reihenschaltung der Widerstände (Rb11—Rb19; Rf11—Rf19) durch mehrere auf einem Chip ausgebildete Widerstandselemente gebildet ist.

6. Nähmaschine nach einem der vorstehenden Ansprüche, die eine stabilisierte Spannungsquelle (Fig. 8; STB; STF) aufweist, um eine stabilisierte Spannung an die Reihenschaltung zu legen.

7. Nähmaschine nach einem der vorstehenden Ansprüche, bie der der Zähler (55; 77) eine Maximalzählzahl aufweist, die der Stichzahl im Muster entspricht.

8. Nähmaschine nach einem der vorstehenden Ansprüche mit einem Zeitsignalgenerator (17; 19), der auf die Drehung einer Hauptstange anspricht, die die Nadel der Nähmaschine antreibt, und der Zeitsignale abgibt, die vom Zähler (55; 77) gezählt werden.

9. Nähmaschine nach einem der vorstehenden Ansprüche, bei der der Zähler (55; 77) einen Transportzähler (77) für die Musterfestlegungseinrichtung (81) der Transportverschiebungssteuerung (79, 81) und einen Schwenkzähler (55) aufweist, für die Musterfestlegeeinrichtung (59) der Schwenkverschiebungssteuerung (57, 59).

10. Nähmaschine nach dem auf Anspruch 8 rückbezogenen Anspruch 9, bei der der Zeitsignalerzeiger (17; 19) einen Transport-Zeitsignalerzeuger (19 zum Abgeben von Zählsignalen an den Transportzähler (77) und einen Schwenk-Zeitsignalerzeuger (17) aufweist zum Abgeben von Zeitsignalen für den Schwenkzähler (55).

11. Nähmaschine nach einem der Ansprüche 1—8, bei der der Zähler einen gemeinsamen Zähler (Fig. 8, CT1) für beide Musterbestimmungseinrichtungen (59 und 81) aufweist.

12. Nähmaschine nach einem der vorstehenden Ansprüche, bei der die Transportverschiebungssteuerung und die Schwenkverschiebungssteuerung einen gemeinsamen Spannungserzeuger aufweisen.

13. Nähmaschine nach einem der vorstehenden Ansprüche mit einer Musterauswahleinrichtung (51) zum Auswählen eines gewünschten Musters aus einer Mehrzahl unterschiedlicher Stichmuster, die durch die Maschine ausgeführt werden können.

14. Nähmaschine nach Anspruch 13, bei der jede der Verschiebungssteuerungen (57, 59; 79, 81) mehrere Spannungserzeuger (Rb1—Rbn; Rf1—Rfn) aufweist, die jeweils einem der mehreren Muster zugeordnet sind, wobei die Musterauswahleinrichtung (51) so arbeitet, daß sie einen ausgewählten Spannungserzeuger freigibt.

15. Nähmaschine nach Anspruch 13 mit mehreren Zählern (Fig. 8, CT1—Ctn), die jeweils einem jeweiligen Stichmuster zugeordnet sind, wobei die Musterauswahleinrichtung (51) so arbeitet, daß sie einen der Zähler zum Arbeiten anwählt.

16. Nähmaschine nach Anspruch 13, bei der jede Verbindungseinrichtung (z.B. Fig. 15, 591, b1) einer Musterbestimmungseinrichtung eine Schalteinrichtung (b1) aufweist, die die Funktion der Verbindungseinrichtung nur dann freigibt, wenn das zugehörige Muster durch die Auswahleinrichtung (51) ausgewählt wird.

17. Nähmaschine nach Anspruch 13, bei der jede Verschiebungssteuerung eine Matrix (Fig. 12: 234; 236) mit mehreren Spalten (L1—Ln) und mehreren Sätzen von Reihen (Rb1—Rb5; Rf1—Rf5) aufweist, wobei die Zahl der Sätze von Reihen der Zahl von Bezugsspannungen entspricht und jeder Satz von Reihen mit einem zugehörigen Spannungserzeugeranschluß verbunden ist, wobei jede Musterbestimmungseinrichtung durch das selektive Koppeln einer jeweiligen Zeile mit den Reihen gebildet ist.

18. Nähmaschine nach Anspruch 17, bei der die Zahl der Reihen in jedem Satz (Rb1—Rb5; Rf1—Rf5) der Maximalzahl von Stichen in einem Muster entspricht.

19. Nähmaschine nach einem der vorstehenden Ansprüche, bei der die Transport- und die Schwenkeinrichtung einen Servoverstärker (99, 101; 71, 73) aufweist, der eine zugehörige Steuerspannung erhält, einen Servomotor (37; 43) aufweist, der durch das Ausgangssignal von Servoverstärker verstärkt wird, und eine Positionsbestimmungseinrichtung (103; 75) aufweist, die mit dem Servomotor verbunden ist, um die Drehposition des Servomotors zu ermitteln, und die das Ausgangssignal an den Servoverstärker zurückgibt.

20. Nähmaschine nach einem der Ansprüche 1—18, bei der die Transport- und die Zuführeinrichtung jeweils einen Spannungs/Puls-Umwandler (111; 105) aufweist, der auf eine zugehörige Steuerspannung anspricht und die Steuerspannung in eine Pulsfolge umwandelt, deren Pulszahl der Steuerspannung entspricht, und mit einem Schrittmotor (37a; 43a), der mit dem Spannungs/Puls-Umwandler verbunden ist und durch die Pulse von demselben erregt wird.

**Revendications**

1. Une machine à coudre comportant des moyens d'avance (13, 31 à 35, 37, 83 à 103) pouvant fonctionner de façon à faire avancer de l'étoffe qui est cousue, et des moyens de déplacement latéral (43, 45 à 49, 61 à 75) destinés à faire osciller une aiguille dans une direction transversale par rapport à la direction d'avance de l'étoffe, les moyens de déplacement latéral comme les moyens d'avance comportant des moyens de commande de déplacement (57, 59; 79, 81) destinés à commander les déplacements respectifs produits par ces moyens pendant la couture, afin de produire un motif de points prédéterminé, chacun des moyens de commande de déplacement comprenant des moyens de détermination de motif (59; 81) connectés à un ensemble de bornes de comptage (Q1 à Q10; F1 à F10) de compteurs (55; 77) pour recevoir d'elles un signal de comptage numérique indiquant le point suivant à réaliser, et un générateur de tension (57; 79) destiné à produire une tension de référence analogique sous la commande des moyens de détermination de motif (59; 81), pour produire un déplacement approprié pour ce point suivant, caractérisée en ce que le générateur de tension (57; 79) est formé par un diviseur de tension (Rb1; Rf1) comprenant un circuit série formé par un ensemble d'éléments de résistances (Rb11 à Rb19; Rf11 à Rf19) connecté de façon à recevoir une tension prédéterminée entre les extrémités du circuit série, ce diviseur de tension (Rb1; Rf1) comportant un ensemble de prises (①, ②, etc.) destinées à fournir des tensions de référence analogiques respectives, en ce que les compteurs (55; 77) sont conçus de façon à produire un signal de sortie sur une borne respective unique parmi les bornes de comptage (Q1 à Q10; F1 à F10) pour chaque point du motif, et en ce que les moyens de détermination de motif (59; 81) comprennent un ensemble d'éléments de connexion (Qb1 à Qb10; Qf1 à Qf10), chacun d'eux étant connecté entre une borne de comptage respective (Q1 à Q10; F1 à F10) et l'une sélectionnée des prises (①, ②, etc.), de façon qu'un signal apparaissant sur cette borne de comptage fasse apparaître la tension de référence qui correspond à ladite prise.

2. Une machine à coudre selon la revendication 1, dans laquelle chaque élément de connexion comprend un interrupteur (Qb1 à Qb10; Qf1 à Qf10) connecté de façon à recevoir une tension de référence provenant d'une prise (①, ②, etc.), et actionné par un signal sur une borne de comptage respective (Q1 à Q10; F1 à F10), de façon à appliquer la tension de référence à une borne de sortie commune (Vbout; Vfout).

3. Une machine à coudre selon la revendication 2, dans laquelle chaque interrupteur (Qb1 à Qb10; Qf1 à Qf10) consiste en un transistor à effet de champ.

4. Une machine à coudre selon la revendication 1, dans laquelle le générateur de tension (figure 8: 205, 207; 215, 217) comprend des interrupteurs (SW1 à SW7), chacun d'eux réagissant à un signal apparaissant sur une borne de générateur de tension respective (s1 à s7) de façon à appliquer à une borne de sortie commune (Vbout; Vfout) la tension de référence analogique présente sur une prise respective, et chaque élément de connexion est connecté à une prise sélectionnée par l'intermédiaire d'une borne de générateur de tension respective (s2 à s7) et par un interrupteur (SW1 à SW7), de façon qu'un signal présent sur la borne de comptage respective actionne l'interrupteur (SW1 à SW7).

5. Une machine à coudre selon l'une quelconque des revendications précédentes, dans laquelle le circuit série d'éléments de résistance (Rb11 à Rb19; Rf11 à Rf19) est constitué par un ensemble d'éléments de résistance formé sur une puce.

6. Une machine à coudre selon l'une quelconque des revendications précédentes, comprenant une source de tension stabilisée (figure 8: STB; STF) destinée à appliquer une tension stabilisée aux bornes du circuit série.

7. Une machine à coudre selon l'une quelconque des revendications précédentes, dans laquelle les compteurs (55; 77) ont un compte maximal égal au nombre de points dans le motif.

8. Une machine à coudre selon l'une quelconque des revendications précédentes, comprenant des moyens générateurs de signaux de synchronisation (17; 19) qui réagissent à la rotation d'un arbre principal entraînt l'aiguille de la machine à coudre en produisant des signaux de synchronisation destinés à être comptés par les compteurs (55; 77).

9. Une machine à coudre selon l'une quelconque des revendications précédentes, dans laquelle les compteurs (55; 77 . . . comprennent un compteur d'avance (77) pour les moyens de détermination de motif (81) des moyens de commande de déplacement d'avance (79, 81), et un compteur de déplacement latéral (55) pour les moyens de détermination de motif (59) des moyens de commande de déplacement latéral (57, 59)

10. Une machine à coudre selon la revendication 9, considérée comme dépendante de la revendication 8, dans laquelle les moyens de génération de signaux de synchronisation (17; 19) comprennent des moyens de génération de signaux de synchronisation d'avance (19) destinés à appliquer des signaux de synchronisation au compteur d'avance (77) et des moyens de génération de signaux de synchronisation de déplacement latéral (17) destinés à appliquer des signaux de synchronisation au compteur de déplacement latéral (55).

11. Une machine à coudre selon l'une quelconque des revendications 1 à 8, dans laquelle les compteurs comprennent un compteur commun (figure 8, CT1) pour les deux types de moyens de détermination de motif (59 et 81).

12. Une machine à coudre selon l'une quelconque des revendications précédentes, dans laquelle les moyens de commande de déplacement d'avance et les moyens de commande de déplacement latéral ont un générateur de tension commun.

13. Une machine à coudre selon l'une quelconque des revendications précédentes, comprenant des moyens de sélection de motif (51) destinés à sélectionner un motif désiré parmi un ensemble de motifs de points différents que peut former la machine.

14. Une machine à coudre selon la revendication 13, caractérisée en ce que chacun des moyens de commande de déplacement (57, 59; 79, 81) comprend un ensemble de générateurs de tension (Rb1 à Rbn; Rf1 à Rfn), chacun d'eux étant associé à un motif respectiv de l'ensemble de motifs, et on peut faire fonctionner les moyens de sélection de motif (51) de façon à valider l'un sélectionné des générateurs de tension.

15. Une machine à coudre selon la revendication 13, comprenant un ensemble de compteurs (figure 8, CT1 à CTn), chacun d'eux étant associé à un motif de points respectif, et on peut faire fonctionner les moyens de sélection de motif (51) de façon à sélectionner l'un des compteurs pour le mettre en fonctionnement.

16. Une machine à coudre selon la revendication 13, dans laquelle chacun des moyens de connexion (par exemple, figure 15, 591, b1) de l'un des moyens de détermination de motif comprend un dispositif de commutation (b1) destiné à permettre le fonctionnement des moyens de connexion uniquement lorsque les moyens de sélection (51) sélectionnent le motif respectif.

17. Une machine à coudre selon la revendication 13, dans laquelle chacun des moyens de commande de déplacement comprend une matrice (figure 12: 234; 236) comprenant un ensemble de colonnes (L1 à Ln) et un ensemble de jeux de lignes (Rb1 à Rb5; Rf1 à Rf5), le nombre de jeux de lignes correspondant au nombre de tensions de référence, et chaque jeu de lignes étant connecté à une borne de générateur de tension respective, et dans laquelle chacun des moyens de détermination de motif est formé par la connexion sélective d'une colonne respective avec les lignes.

18. Une machine à coudre selon la revendication 17, dans laquèlle le nombre de lignes dans chaque jeu (Rb1 à Rb5; Rf1 à Rf5) correspond au nombre maximal de points dans un motif.

19. Une machine à coudre selon l'une quelconque des revendications précédentes dans laquelle chacun des moyens d'avance et de déplacement latéral comprend des moyens à servo-amplificateur (99, 101; 71, 73) connectés de façon à recevoir une tension de commande respective, des moyens à servomoteur (37; 43) connectés de façon à être alimentés par le signal de sortie des moyens à servo-amplificateur, et des moyens de détection de position (103; 75) connectés aux moyens à servomoteur de façon à détecter une position en rotation des moyens à servomoteur, afin de renvoyer le signal de sortie vers les moyens à servo-amplificateur.

20. Une machine à coudre selon l'une quelconque des revendication 1 à 18, dans laquelle chacun des moyens d'avance et de déplacement latéral comprend des moyens de conversion tension/impulsions (111; 105) qui réagissent à une tension de commande respective en convertissant cette tension de commande en un train d'impulsions dont le nombre et associé à la tension de commande, et des moyens à moteur à impulsions (37a; 43a) connectés aux moyens convertisseurs tension/impulsions de façon à être alimentés par les impulsions provenant des moyens convertisseurs tension/impulsions.

FIG.1

FIG. 2

FIG. 3A

17 BIGHT PULSE GEN

51 P1 P2 P3 P4 / P5 P6 P7 ·· / · · · · / · · ·· Pn

53 SWITCH DECODER

55 Q1 Q2 Q3 Q4 Q5 Q6 Q7 Q8 Q9 Q10

TO 77

TO 79

59 57

Qb1 Qb2 Qb3 Qb4 Qb5 Qb6 Qb7 Qb8 Qb9 Qb10

P1 P2 P3 P4 ····· Pn

Vbout
+Vb

Sb1 Sb2 Sb3 Sb4 Sbn

① ② ③ ④ ⑤ ⑥ ⑦ ⑧ ⑨ ⑩

| Rb11 | Rb21 | Rb31 | Rb41 | Rbn1 |
| Rb12 | Rb22 | Rb32 | Rb42 | Rbn2 |
| Rb13 | Rb23 | Rb33 | Rb43 | Rbn3 |
| Rb14 | Rb24 | Rb34 | Rb44 | Rbn4 |
| Rb15 | Rb25 | Rb35 | Rb45 | Rbn5 |
| Rb16 | Rb26 | Rb36 | Rb46 | Rbn6 |
| Rb17 | Rb27 | Rb37 | Rb47 | Rbn7 |
| Rb18 | Rb28 | Rb38 | Rb48 | Rbn8 |
| Rb19 | Rb29 | Rb39 | Rb49 | Rbn9 |
| Rb1 | Rb2 | Rb3 | Rb4 | Rbn |

GND

0 020 838

3

FIG. 3B

FROM 53

FROM 53

19
FEED PULSE GEN

0 020 838

4

## FIG. 4A

## FIG. 4B

| STITCH | BIGHT POSITION | FEED AMOUNT |
|--------|----------------|-------------|
| 1 | 1 | 0 |
| 2 | 1 | + 2 |
| 3 | 3 | 0 |
| 4 | 3 | -1 |
| 5 | 5 | 0 |
| 6 | 5 | +2 |

# FIG. 5

# FIG. 6

0 020 838

## FIG.7A

BIGHT →

FEED

1 (1,4)
2 (1,4)
3 (1,7)
4 (1,4)
5 (1,4)
6 (1,1)
7 (1,4)

## FIG.7B

| STITCH | BIGHT POSITION | FEED AMOUNT |
|---|---|---|
| 1 | 4 | 1 |
| 2 | 4 | 1 |
| 3 | 7 | 1 |
| 4 | 4 | 1 |
| 5 | 4 | 1 |
| 6 | 1 | 1 |
| 7 | 4 | 1 |

8

# FIG. 8

# FIG. 9

# FIG. 10

FIG.11

# FIG.12

0 020 838

## FIG. 13A

FROM 53   FROM 55

## FIG. 13B

FROM 53

13

# FIG.14A

# FIG.14B

## FIG. 15

## FIG. 17B

*BIGHT*

## FIG. 17C

*BIGHT POSITION*

| STITCH | BIGHT POSITION | FEED AMOUNT |
|:---:|:---:|:---:|
| 1 | 12 | +6 |
| 2 | 12 | +6 |
| 3 | 0 | -6 |
| 4 | 0 | +6 |
| 5 | 0 | +6 |
| 6 | 12 | -6 |

FIG.16

FIG.17A

FIG.17D